# EUROPEAN PATENT APPLICATION

(11) **EP 3 904 031 A1**
(43) Date of publication of application: **03.11.2021**
(21) Application number: 19901830.0
(22) Date of filing: 27.12.2019
(51) Int. Cl.: B29B 11/16, B29K 105/10, B29C 43/34, B29C 70/16, B29C 70/42

(54) **METHOD FOR MANUFACTURING PREFORM, METHOD FOR MANUFACTURING COMPOSITE MATERIAL MOLDED ARTICLE, AND MOLD**

(30) Priority: 27.12.2018 JP 2018245970
(71) Applicant: Mitsubishi Chemical Corporation, Chiyoda-ku Tokyo 100-8251 (JP)
(72) Inventor: ICHINO, Masahiro, Tokyo 100-8251 (JP); FURUHASHI, Yuma, Tokyo 100-8251 (JP); HACHIYA, Yukiko, Tokyo 100-8251 (JP)
(74) Representative: Hoffmann Eitle
(86) International application number: PCT/JP2019/051553
(87) International publication number: WO 2020/138473

(57) **Abstract**

The present invention realizes the production of a molded composite article that has superior appearance, that is capable of preventing or reducing a deterioration of mechanical properties, and that is superior in productivity. A sheet of a unidirectional material is fixed to a specific part of a lower mold, a force in an out-of-plane direction is applied to a specific part of a zone of the sheet which zone is to undergo shear deformation or compressive deformation, and the sheet is preformed, thereby obtaining a preform. Heat and pressure are applied to the preform in a mold, thereby obtaining a molded composite article having a desired shape.

## Description

### Technical Field

The present invention relates to a method of producing a preform and a method of producing a molded composite article, and relates to a mold.

### Background Art

A molded composite article, obtained by impregnating a reinforcing fiber base material (including reinforcing fiber) with a matrix resin and curing it, typically is lightweight and has superior mechanical properties. Therefore, molded composite articles are widely used in various applications in various fields such as sports, aerospace, and general industry.

The reinforcing fiber base material is usually planar (in the form of a sheet), and there is a known method by which, before the foregoing curing, the reinforcing fiber base material is preformed to have the shape of a molded composite article or a similar shape to obtain a preform from which the molded composite article is obtained. The preform is further subjected to compression molding to produce the molded composite article. One known method of producing the preform is a method involving preparing partial preforms and joining the partial preforms together at their joints to produce a single-part preform corresponding to a molded composite article (see, for example, Patent Literature 1).

### Citation List

### [Patent Literature]

[Patent Literature 1] International Publication No. WO 2014/038710

### Summary of Invention

### Technical Problem

The above production method involves producing a preform by joining partial preforms; therefore, the method makes it possible to sufficiently reduce the occurrence of wrinkles in the preform and thus possible to produce a molded composite article that has superior appearance, even in the case of a molded composite article having a complex shape.

However, the above production method involves producing a preform by joining partial preforms, and therefore the strength at, for example the joints may be lower than that of a molded composite article produced from a preform obtained by preforming a single-part reinforcing fiber base material.

Furthermore, because the above production method involves producing a preform by joining partial preforms, it is necessary to carry out various steps therefor. For example, it is necessary to cut a reinforcing fiber base material so that partial preforms can be arranged next to each other or arranged to be on top of each other appropriately in the thickness direction. It is also necessary to join the prepared partial preforms. As such, the above production method still has room for consideration in terms of the mechanical properties and productivity of the molded composite article.

An object of an aspect of the present invention is to provide a method of producing a molded composite article that has superior appearance, that is capable of preventing or reducing a deterioration of mechanical properties, and that is superior in productivity.

### Solution to Problem

In order to attain the above object, a method of producing a preform in accordance with an aspect of the present invention is a method including causing a planar reinforcing fiber base material to at least partially undergo shear deformation and/or compressive deformation to preform the reinforcing fiber base material into a three-dimensional shape, the reinforcing fiber base material including reinforcing fiber and a matrix resin composition, the method including: a first step including fixing, to a preform mold, at least one of (i) an edge of a zone of the reinforcing fiber base material which zone is to undergo shear deformation and/or compressive deformation and (ii) a part adjacent to the zone; and a second step including, after the edge and/or the part is/are fixed, applying a force in an out-of-plane direction to the zone which is to undergo the shear deformation and/or compressive deformation.

In order to attain the above object, a method of producing a molded composite article in accordance with an aspect of the present invention includes the steps of: producing a preform by the above method of producing a preform; and producing a molded composite article by applying heat and pressure to the preform.

In order to attain the above object, a method of producing a molded composite article in accordance with an aspect of the present invention is a method of producing a molded composite article, including causing a planar reinforcing fiber base material to at least partially undergo shear deformation and/or compressive deformation to obtain a molded composite article, the reinforcing fiber base material including reinforcing fiber and a matrix resin composition, the method including: a first step including fixing, to a shaping mold, at least one of (i) an edge of a zone of the reinforcing fiber base material which zone is to undergo shear deformation and/or compressive deformation and (ii) a part adjacent to the zone; a second step including, after the edge and/or the part is/are fixed, applying a force in an out-of-plane direction to the zone which is to undergo the shear deformation and/or compressive deformation; and a molding step including applying heat and pressure to the reinforcing fiber base material, which is receiving the force in the out-of-plane direction, to obtain a molded composite article.

In order to attain the above object, a mold in accordance with an aspect of the present invention is a mold including an upper mold and a lower mold, wherein one or both of the upper mold and the lower mold is/are split mold(s) composed of mold parts that are independently movable, the mold including: a first mechanism configured to cause a portion of the mold parts to fix, to the lower mold, at least one of (i) an edge of a zone of a planar reinforcing fiber base material which zone is to undergo shear deformation and/or compressive deformation and (ii) a part adjacent to the zone, the reinforcing fiber base material including reinforcing fiber; and a second mechanism configured to cause another portion of the mold parts to apply a force, in an out-of-plane direction of the reinforcing fiber base material, to the zone which is to undergo the shear deformation and/or compressive deformation.

### Advantageous Effects of Invention

An aspect of the present invention makes it possible to provide a method of producing a molded composite article that has superior appearance, that is capable of preventing or reducing a deterioration of mechanical properties, and that is superior in productivity.

### Brief Description of Drawings

Fig. 1 schematically illustrates a sample of a reinforcing fiber base material for measurement of the amount of deformation of a reinforcing fiber base material in accordance with the present invention.
Fig. 2 schematically illustrates (i) the shape of a cell of a grid pattern on the sample in Fig. 1 before shear deformation of the sample and (ii) the shape of the cell after the shear deformation of the sample.
Fig. 3 schematically illustrates an example of a structure of a lower mold of a preform mold in accordance with an embodiment of the present invention.
Fig. 4 illustrates parts of a lower mold in accordance with the present invention which parts act on a reinforcing fiber base material during the process of producing a preform.
Fig. 5 schematically illustrates an example of a configuration of an upper split mold of a mold in accordance with an embodiment of the present invention.
Fig. 6 schematically illustrates the upper split mold such that driving sections of the upper split mold illustrated in Fig. 5 are visible.
Fig. 7 schematically illustrates an example of a configuration of a lower split mold of the mold in accordance with an embodiment of the present invention.
Fig. 8 schematically illustrates the lower split mold such that driving sections of the lower split mold illustrated in Fig. 7 are visible.
Fig. 9 is a side view schematically illustrating main parts of a mold in accordance with an embodiment of the present invention in a first state during production of a preform with use of the mold.
Fig. 10 is a front view schematically illustrating the main parts of the mold in accordance with an embodiment of the present invention in the first state during production of a preform with use of the mold.
Fig. 11 is a side view schematically illustrating the main parts of the mold in accordance with an embodiment of the present invention in a second state during production of a preform with use of the mold.
Fig. 12 is a front view schematically illustrating the main parts of the mold in accordance with an embodiment of the present invention in the second state during production of a preform with use of the mold.
Fig. 13 is a side view schematically illustrating the main parts of the mold in accordance with an embodiment of the present invention in a third state during production of a preform with use of the mold
Fig. 14 is a front view schematically illustrating the main parts of the mold in accordance with an embodiment of the present invention in the third state during production of a preform with use of the mold.
Fig. 15 is a side view schematically illustrating the main parts of the mold in accordance with an embodiment of the present invention in a fourth state during production of a preform with use of the mold.
Fig. 16 is a front view schematically illustrating the main parts of the mold in accordance with an embodiment of the present invention in the fourth state during production of a preform with use of the mold.
Fig. 17 is a plan view of a lower mold used in Examples.
   (a) of Fig. 18 shows the amounts of deformation in a main part of a preform of Example 1. (b) of Fig. 18 shows the amounts of deformation in a main part of a preform of Example 2.
Fig. 19 is a drawing with reference to which the dimensions of a floor pan produced in an Example are described.

### Description of Embodiments

### [Method of producing preform]

A method of producing a preform in accordance with an embodiment of the present invention involves preforming a reinforcing fiber base material into a three-dimensional shape by pressing the reinforcing fiber base material against a preform mold and causing the reinforcing fiber base material to at least partially undergo shear deformation and/or compressive deformation. Note that the phrase "A and/or B" in the present specification refers to "one or both of A and B".

The reinforcing fiber base material has a planar shape. That is, the reinforcing fiber base material spreads in in-plane directions. A planar reinforcing fiber base material is, for example, a sheet of reinforcing fiber base material. The reinforcing fiber base material can be selected as appropriate from known base materials that can be used in producing a preform and a molded composite article, provided that the base material is planar. The reinforcing fiber base material will be described later in detail.

The preform mold can be selected as appropriate, provided that the preform mold can be used in preforming a reinforcing fiber base material. The preform mold will be described later in detail with reference to drawings.

The reinforcing fiber base material is preformed into a three-dimensional shape. The three-dimensional shape means a solid shape, and is composed of one of or a combination of two or more of the following: a planar surface, a developable surface, and a three-dimensional curved surface. A developable surface is a surface that can be developed and thereby flattened into a plane without stretching or compression. An example of the developable surface is a conical surface.

A three-dimensional curved surface is a surface that cannot be formed without stretching or compression of a planar surface, and is a surface that cannot be developed and thereby flattened into a plane. An example of the three-dimensional curved surface is a spherical surface.

In a case where the shape into which the reinforcing fiber face material is to be preformed is composed of a developable surface and/or a three-dimensional shape, complex deformation that contains shearing, compression, or both of them occurs during preforming; therefore, an advantage of the method of producing a preform in accordance with the present embodiment is likely to be more apparent.

When a two-dimensional planar sheet member is pressed to conform to a mold for formation of the three-dimensional shape, shear deformation occurs during preforming. In a case where the area of a surface to which the original sheet member conforms is smaller than the area of the original sheet member, compressive deformation occurs concurrently during preforming. In the present embodiment, the reinforcing fiber base material at least partially deforms by shear deformation and/or compressive deformation or by both of them, and thereby the reinforcing fiber base material is preformed. The reinforcing fiber base material is preformed to produce a preform. The present embodiment makes it possible to obtain a preform which has good appearance even in a case where preforming to obtain a three dimensional shape, in which shear deformation occurs, is carried out. Furthermore, it is possible to obtain a preform which has good appearance even in a case where not only shear deformation but also compressive deformation occurs.

Preforming of a reinforcing fiber base material in accordance with the present embodiment more specifically includes the following first step and second step.

### [First step]

The first step is a step of fixing, to a preform mold, (i) an edge of a zone of the reinforcing fiber base material which zone is to undergo shear deformation and/or compressive deformation or (ii) a part adjacent to that zone.

The "zone which is to undergo shear deformation and/or compressive deformation" (hereinafter may be referred to as a "shear/compressive deformation zone") in the first step is at least a part of the reinforcing fiber base material. The shear/compressive deformation zone is, for example, at least one of (i) a zone to undergo shear deformation in the second step (described later) and (ii) a zone to undergo compressive deformation in the second step. The shear/compressive deformation zone is determined according to the shape into which the reinforcing fiber base material is to be preformed. The shape into which the reinforcing fiber base material is to be preformed is the shape of a molded composite article or a shape that is close to the shape of the molded composite article and that should be achieved by a preform.

It is noted here that, in the first step, (i) an edge of the shear/compressive deformation zone, (ii) a part adjacent to the shear/compressive deformation zone, or both the edge (i) and the part (ii), of the reinforcing fiber base material, is/are fixed. An edge of the shear/compressive deformation zone refers to a part of the shear/compressive deformation zone which part is located not in the middle of the shear/compressive deformation zone but located on a distal end of the shear/compressive deformation zone. A part adjacent to the shear/compressive deformation zone refers to a part that is not included in the shear/compressive deformation zone but is not spaced apart from the shear/compressive deformation zone. This part can be, for example, the point at which shear deformation starts or can serve as a fixed end which defines a part that undergoes compressive deformation. For example, in a case where the reinforcing fiber base material is pulled in a direction along an edge of the fixed part of the reinforcing fiber base material in the first step, shear deformation occurs. Furthermore, the fixed part of the reinforcing fiber base material in the first step does not substantially deform; therefore, in a case where the reinforcing fiber base material is caused to deform in the vicinity of the fixed part such that the area of the reinforcing fiber base material decreases, compressive deformation occurs.

It is possible to predict the direction(s) of a force that acts on the foregoing part of the reinforcing fiber base material when the reinforcing fiber base material fixed to the preform mold is preformed. Therefore, it is also possible to predict which part(s) of the reinforcing fiber base material undergoes shear deformation and compressive deformation when the reinforcing fiber base material fixed is preformed. A part of the reinforcing fiber base material which part is fixed in the first step can be selected as appropriate according to the shape of the preform mold.

For example, the part fixed in the first step is preferably a part composed of a planar surface (for example, the foregoing planar surface or developable surface), in terms of preventing or reducing the occurrence of wrinkles. Furthermore, the part fixed in the first step is preferably a part located highest in the lower mold of the preform mold, from the above point of view. It is noted here that, in a case where the reinforcing fiber base material is a material in which continuous fibers are aligned, the foregoing two directions preferably include the fiber axis direction (also referred to as "orientation direction") of the reinforcing fiber base material. Furthermore, in a case where a plurality of parts are fixed in the first step, parts located higher are preferably fixed first, in terms of preventing or reducing the occurrence of wrinkles. In a case where the lower mold has a raised portion at the center thereof, the part(s) fixed in the first step preferably include an edge of the lower mold and/or the center of the lower mold, in terms of improving the conformity of the reinforcing fiber base material to the lower mold during preforming.

The "fix" in the first step means that a part of the reinforcing fiber base material which part should be fixed does not substantially move relative to the preform mold. For example, a part of the reinforcing fiber base material fixed in the first step may not move either in out-of-plane directions or in-plane directions. Alternatively, a part of the reinforcing fiber base material fixed in the first step may move, provided that sufficient shear/compressive deformation is achieved in the second step. An in-plane direction in this case means a horizontal direction in a plane including the reinforcing fiber base material on the plane, whereas an out-of-plane direction in this case refers to a direction orthogonal to such an in-plane direction.

Note that, instead of "fixing", the reinforcing fiber base material may be loosely fixed so that the reinforcing fiber base material can move by sliding. In the case of loose fixing, if the reinforcing fiber base material is little extensible, the reinforcing fiber base material is pulled toward the interior of the mold from the vicinity of the pressed part; therefore, the edges of the preformed reinforcing fiber base material are not shaped as intended, in many cases. This necessitates cropping so that the shape into which the reinforcing fiber base should be preformed is achieved. Therefore, "fixing" is more preferred than "loose fixing".

A method for fixing such a part of the reinforcing fiber base material to the preform mold can be selected as appropriate further in consideration of the configuration of the reinforcing fiber base material. Examples of the method include: a method by which the reinforcing fiber base material is bonded to the preform mold with an adhesive member other than the reinforcing fiber base material; a method by which the reinforcing fiber base material is fixed to the preform mold using the stickiness of the reinforcing fiber base material; and fixing by vacuum deaeration.

Examples of the adhesive member used in fixing by bonding include: heat-resistant tape having an adhesive layer; and adhesives. An adhesive may be a resin of the same type as or a different type from the matrix resin impregnated in the reinforcing fiber base material or may contain both of them. The adhesive may be an adhesive compound that constitutes the foregoing adhesive layer.

Examples of fixing using stickiness include: fixing by heating; and fixing by pressing.

Fixing by heating is a method by which, in a case where, for example, the reinforcing fiber base material further contains a matrix resin composition (described later), the reinforcing fiber base material is fixed relatively to the preform mold using the stickiness of the matrix resin composition oozing out of the reinforcing fiber base material by heating. Conditions under which heating is carried out in the fixing by heating, such as temperature and time, can be selected as appropriate, provided that sufficient bond strength can be achieved by the stickiness.

Fixing by pressing is a method by which the reinforcing fiber base material is fixed relatively to the preform mold using the stickiness of the matrix resin composition oozing out of the reinforcing fiber base material by pressure. Conditions under which pressing is carried out, such as pressure, can be selected as appropriate, provided that sufficient bond strength can be achieved by the stickiness, similar to the fixing by heating.

Fixing by vacuum deaeration is a method by which, in a region where the reinforcing fiber base material is to be fixed, the reinforcing fiber base material and the preform mold are hermetically covered, and the covered part is deaerated and sufficiently vacuumized, thereby fixing the reinforcing fiber base material to the preform mold in the part hermetically covered. Conditions under which vacuum deaeration is carried out, such as the degree of vacuumization, can be selected as appropriate, provided that sufficiently strong fixing is achieved by vacuumization.

With the first step, the following is determined: which part of a reinforcing fiber base material undergoes shear deformation and which part of the reinforcing fiber base material undergoes compressive deformation when the fixed reinforcing fiber base material is pressed by engaging (the lower mold and the upper mold of) the preform mold after the first step.

### [Second step]

The second step is a step of, after the first step, applying a force in out-of-plane direction(s) to the shear/compressive deformation zone. In the second step, the force in the out-of-plane direction may be applied to the entire shear/compressive deformation zone; alternatively, the force may be applied to a part of the shear/compressive deformation zone, provided that the occurrence of wrinkles in the preform can be substantially prevented.

The part of the shear/compressive deformation zone to which part the force in the out-of-plane direction is to be applied can be selected as appropriate, provided that the occurrence of wrinkles in the preform can be substantially prevented. Examples of the part of the shear/compressive deformation zone to which part the force in the out-of-plane direction is applied in the second step include: a first part of the shear/ compressive deformation zone in which part the amount of deformation is largest; a second part of the shear/compressive deformation zone in which part the amount of deformation is larger than that in the vicinity of the second part; a third part of the shear/compressive deformation zone in which part the amount of deformation is larger than a threshold; and a fourth part of the shear/compressive deformation zone in which part the average amount of deformation over a certain area is larger than a threshold.

The part to which the force in the out-of-plane direction is applied may be a part where shear deformation occurs, a part where compressive deformation occurs, or a part adjacent to any of such parts. It is preferable that the part to which the force in the out-of-plane direction is applied be a part where compressive deformation occurs, in terms of preventing or reducing the lifting resulting from compression and in terms of more effectively preventing the occurrence of wrinkles in the preform. The fact that "the part to which the force in the out-of-plane direction is to be applied is a part adjacent to the part where shear deformation occurs" indicates that, because an end of the part where shear deformation occurs is fixed, the force in the out-of-plane direction is applied to the other end of the part where shear deformation occurs. Therefore, it is preferable that the part to which the force in the out-of-plane direction is to be applied is a part adjacent to the part where shear deformation occurs, because this makes it possible to efficiently cause shear deformation.

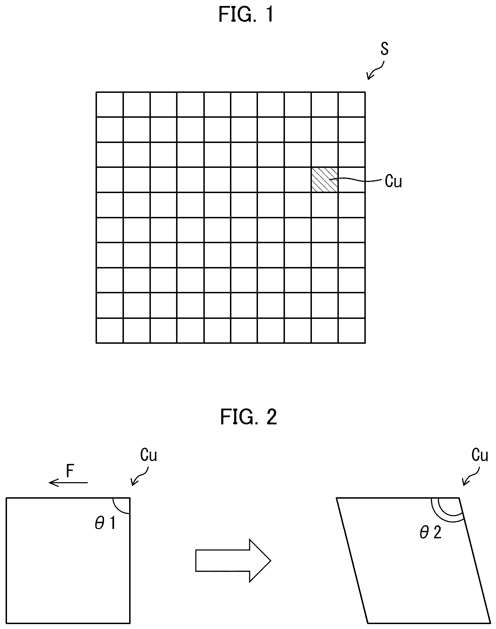

It is noted here that the amount of deformation in the reinforcing fiber base material can be measured in the following manner. Fig. 1 schematically illustrates a sample of a reinforcing fiber base material for measurement of the amount of deformation of the reinforcing fiber base material. Fig. 2 schematically illustrates (i) the shape of a cell of a grid pattern in the sample in Fig. 1 before shear deformation of the sample and (ii) the shape of the cell after the shear deformation of the sample.

First, a sample S of a reinforcing fiber base material having cells Cu arranged in the form of a grid as shown in Fig. 1 is prepared. The shape of the sample S in plan view and the shape of each cell Cu of the grid in plan view are both rectangle. An angle θ1 in the cell Cu is, for example, 90° as illustrated in Fig. 2.

Next, at least edges including a pair of opposite sides of the sample S are held by respective jigs. Next, a force in a direction giving a shearing force to the sample (for example, a force in the direction indicated by arrow F when a lower part of the sample S is fixed in Fig. 2) is applied to each jig, and thereby the shape of the sample S in plan view is deformed. With this, an angle θ2 of a corner of the cell Cu becomes greater than 90° as illustrated in Fig. 2, for example. The angle θ2 here is used as the amount of deformation. The amount of deformation need only be expressed so that the amount of change from the original angle is understandable. For example, the amount of deformation can be expressed by the absolute value of the angle or can be expressed by the difference from the original angle (θ1=90°) or the absolute value of the difference. The amount of deformation immediately before a wrinkle occurs in the sample S is defined as the maximum amount of deformation.

By preforming a reinforcing fiber base material having the foregoing grid pattern into the shape of a preform, the amount of deformation in a part of the reinforcing fiber base material when preformed into the shape of a preform can be determined. Any of such parts where the amount of deformation is large, determined in the above manner, can be decided to be a part to which the force in the out-of-plane direction is to be applied in the second step.

The force in the out-of-plane direction in the second step means a force in a direction orthogonal to in-plane of the reinforcing fiber base material. In the present invention, the force in the out-of-plane direction refers to a force in a direction pressing the reinforcing fiber base material toward the lower mold of the preform mold. The force in the out-of-plane direction can be applied to a predetermined part of the reinforcing fiber base material by any of various methods. For example, the force in the out-of-plane direction can be applied to the predetermined part by pressing with the upper mold for pressing the reinforcing fiber base material toward the lower mold of the preform mold. Alternatively, the force in the out-of-plane direction can be applied to the predetermined part by pressing with a pressing member for pressing the reinforcing fiber base material against a part of the lower mold of the preform mold which part corresponds to the predetermined part. The pressing member can be, for example, an elastic member (for example, a member made of polyethylene foam or the like) having a planar shape that corresponds to the part of the lower mold.

In the second step, it is possible to induce out-of-plane deformation of the reinforcing fiber base material by causing the shear/compressive deformation zone to undergo shear deformation which exceeds the amount of deformation of the reinforcing fiber base material. Specifically, a reinforcing fiber base material having an amount of deformation smaller than the amount of deformation required for the shape of a preform can be caused to undergo shear/compressive deformation in the second step. In such a case, the part of the reinforcing fiber base material to which part the force in the out-of-plane direction is applied first deforms to the amount of deformation of the reinforcing fiber base material. In a case where shearing force/compression force exceeding the amount of deformation of the reinforcing fiber base material is applied, a wrinkle occurs in the reinforcing fiber base material. That is, deformation in the out-of-plane direction occurs. When the reinforcing fiber base material is pressed in the out-of-plane direction in such conditions, the reinforcing fiber base material can be deformed further in the out-of-plane direction. In addition, a vicinity of the shear/compressive deformation zone of the reinforcing fiber base material (for example, the foregoing planar surface or developable surface) also undergoes out-of-plane deformation, and this supplements insufficient deformation of the reinforcing fiber base material in the part to which the force in the out-of-plane direction is applied, in some cases. Therefore, in the present embodiment, a reinforcing fiber base material having an amount of deformation less than the amount of deformation required for the shape of a preform can be employed, provided that the amount of deformation of the reinforcing fiber base material can be complemented in the above manner.

With regard to the pressing carried out stepwise in the first step and the second step, it is preferable that the position to be pressed in the first step is located shallower and the position to be pressed in the second step is located deeper along the direction in which pressing is carried out. This is preferred in terms of causing shearing and compression to occur in the reinforcing fiber base material while using the weight and draping properties of the reinforcing fiber base material while ensuring that no wrinkles occur.

The reinforcing fiber base material to which a force in out-of-plane direction(s) is applied in the second step is preferably fixed at at least three sides of the four sides defined by two axes orthogonal to each other in a plane. In such a case, the reinforcing fiber base material, to which the force in the out-of-plane direction is applied, has a free end at at least one side of the four sides. Assume a case in which a certain direction is defined with respect to a mold. In this case, if there is a part where the dimension of the mold along that certain direction differs from that in other parts, when a force in an out-of-plane direction is applied, the reinforcing fiber base material is partially drawn into the mold if the reinforcing fiber base material used does not stretch much. That is, movement in in-plane direction(s) occurs. In such a case, the reinforcing fiber base material is capable of easily moving in the in-plane direction from the free-end side. Thus, the above configuration is preferred in terms of preventing or reducing the occurrence of wrinkles in the prepreg and the molded composite article.

### [Other steps]

The method of producing a preform in accordance with the present embodiment may further include other step(s) other than the first and second steps, provided that the effect of the present embodiment is achieved. For example, the method of producing a preform may further include a movement assisting step in the second step.

The movement assisting step is a step of assisting the movement of the reinforcing fiber base material, accompanying the shear deformation and/or the compressive deformation, in in-plane direction(s). With regard to shear deformation and/or compressive deformation caused by applying a force in out-of-plane direction(s), the reinforcing fiber base material is fixed to the mold in advance. Therefore, in a case where there is a zone where the amount of deformation changes in steps, some parts of the reinforcing fiber base material move in steps in the in-plane direction as the deformation occurs. If the movement in the in-plane direction is insufficient, other zones may be wrinkled to complement the insufficient movement.

The movement assisting step involves, in order to assist the deformation of a part of the base material in which part the degree of deformation is relatively large, assisting the part of the base material in which part the degree of deformation is relatively large or a part adjacent to that part moves toward a pre-fixed part of the reinforcing fiber base material in the in-plane direction. The movement assisting step can be carried out by actively causing the reinforcing fiber base material to move in the in-plane direction. For example, the movement assisting step can be carried out with use of a third mechanism (described later with regard to a mold).

In the movement assisting step, it is preferable to increase the slipperiness of the reinforcing fiber base material with respect to the mold, in terms of carrying out the movement in the in-plane direction smoothly and preventing or reducing the occurrence of wrinkles. The slipperiness can be increased by, for example, imparting a highly releasable layer such as a fluororesin layer to a part of the surface of the mold corresponding to a part of the reinforcing fiber base material which part is to be moved in the in-plane direction. Alternatively, the slipperiness can be increased by coating, with a coating material such as a protective film, the surface of the reinforcing fiber base material which surface abuts the mold.

In the movement assisting step, (i) the application of a force in out-of-plane direction(s) to a zone to undergo shear deformation and/or compressive deformation, and (ii) the assistance of the movement of the reinforcing fiber base material in in-plane direction(s) resulting from the application of the force, can be carried out independently of each other. Carrying out both (i) and (ii) concurrently is preferred in terms of preventing or reducing the occurrence of wrinkles in the reinforcing fiber base material.

The method of producing a preform may further include a third step that involves pressing the entire reinforcing fiber base material after the second step.

### (Third step)

The third step can be carried out by pressing the reinforcing fiber base material with the upper mold that corresponds to the lower mold of the preform mold. Alternatively, in a case where the reinforcing fiber base material has been fixed in the first step and is in a deformed state because of the application of a force in out-of-plane direction(s) in the second step, the third step can be carried out by pressing, toward the lower mold of the preform mold, the surface of the reinforcing fiber base material except for these pressed parts. The third step makes it possible to more strongly preform the reinforcing fiber base material and to produce an even better preform.

### (Loosely fixing step)

The method of producing a preform in accordance with the present embodiment may further include a loosely fixing step that involves loosely fixing the reinforcing fiber base material, as the foregoing other step. The loosely fixing step is a step of applying a force in out-of-plane direction(s) to a part of the reinforcing fiber base material, in which the reinforcing fiber base material is not completely fixed so that the movement of the reinforcing fiber base material in in-plane direction(s) is allowed. The loosely fixing step can be carried out by, for example, pressing, with an appropriate force toward the lower mold, the reinforcing fiber base material with the upper mold or with some other member projecting from the upper mold. The loosely fixing step is carried out with respect to, for example, an edge of the reinforcing fiber base material, and, while preforming the reinforcing fiber base material, the edge is prevented from bending upward when the central portion of the reinforcing fiber base material is pressed. Thus, the loosely fixing step is preferred in order to prevent the occurrence of wrinkles.

### (Compacting step)

The method of producing a preform in accordance with the present embodiment may further include a compacting step that involves compacting the planar reinforcing fiber base material, as the foregoing other step. The compacting step is preferred in a case where a plurality of sheets of the reinforcing fiber base material stacked together is used, in terms of increasing the bond strength between the sheets of the reinforcing fiber base material.

The compacting step is a step of removing air contained in the reinforcing fiber base material, and can be suitably carried out by pressing the reinforcing fiber base material along an out-of-plane direction. A sheet of the reinforcing fiber base material is used or two or more sheets of the reinforcing fiber base material are used. Since a cloth material is a woven material, the cloth material does not lose the sheet shape during preforming; therefore, a single-layer cloth material (a sheet of the cloth material) can be used. In a case where two or more sheets of the reinforcing fiber base material are used, a laminate of the two or more sheets of the reinforcing fiber base material is used. In a case where two or more sheets of the reinforcing fiber base material are used, a stack of sheets of the same shape may be used or a stack of sheets cut in the shape of a part for which high strength and/or rigidity is/are required may be used.

The compacting step can be carried out by, for example: placing the reinforcing fiber base material on a flat worktable; placing an elastic sheet such as a rubber sheet on the reinforcing fiber base material; and press fitting the elastic sheet to the reinforcing fiber base material by carrying out vacuumization from the worktable side. The compacted reinforcing fiber base material is obtained by stopping the vacuumization and allowing the pressure in a space between the elastic sheet and the worktable to return to atmospheric pressure. Carrying out such a compacting step is effective also in terms of substantially maintaining the assembled state (state of the laminate of) the two or more sheets of the reinforcing fiber base material.

### (Cutting step)

The method of producing a preform in accordance with the present embodiment may further include a cutting step that involves cutting the planar reinforcing fiber base material into a desired shape, as the foregoing other step. The cutting step can be carried out by, before placing the reinforcing fiber base material prior to the compaction, cutting the reinforcing fiber base material into a desired shape. The desired shape is, for example, a shape obtained by projecting the reinforcing fiber base material conforming to the preform mold onto a plane and/or a shape obtained by unfolding the reinforcing fiber base material. More specific examples of the cutting step include: a step of cutting off a margin (remainder) of the reinforcing fiber base material; and a step of making a cut that is suitable for conformity to the preform mold. The cutting step may be carried out with use of a known cutting apparatus such as an ultrasonic cutter or may be carried out with use of a typical cutting instrument such as scissors or a cutter. An object to be cut in the cutting step may be a single sheet of the reinforcing fiber base material or a laminate of two or more sheets of the reinforcing fiber base material described earlier.

### [Reinforcing fiber base material]

The reinforcing fiber base material contains reinforcing fiber. The reinforcing fiber base material may be impregnated with a matrix resin composition. Examples of a reinforcing fiber base material not impregnated with a matrix resin composition include: woven fabric (oblique woven fabric, triaxial woven fabric, three-dimensional woven fabric, and circular woven fabric); braid or braided fabric; non-crimp fabric; and cord fabric.

### (Reinforcing fiber)

The reinforcing fiber can be fiber that is used in a composite material that can be reinforced by typical fiber. One type of reinforcing fiber may be used, or two or more types of reinforcing fiber may be used. The reinforcing fiber can be selected as appropriate according to the purpose of use of the molded composite article (end product), such as desired physical properties of the molded composite article (described later).

The thickness of the reinforcing fiber, in terms of filament diameter, is preferably within the range of 1 µm to 20 µm, more preferably within the range of 3 µm to 10 µm. It is preferable that the thickness of the reinforcing fiber be not more than 20 µm, in terms of the production efficiency in a fireproofing step and a firing step and in terms of reducing the defect density of the reinforcing fiber and increasing the strength of the reinforcing fiber. Furthermore, when the thickness of the reinforcing fiber is not less than 1 µm, the productivity of a reinforcing fiber bundle increases, thereby making it possible to reduce production cost. Note that the "filament diameter" in the present specification means the diameter of a circle with equal area to that of a cross section of each filament.

One type of reinforcing fiber may be used or two or more types of reinforcing fiber may be used in combination. Examples of the reinforcing fiber include glass fiber, carbon fiber, aramid fiber, high strength polyester fiber, boron fiber, alumina fiber, silicon nitride fiber, and nylon fiber. Note that carbon fiber includes graphite fiber.

Among those listed above, carbon fiber is preferred because carbon fiber is lightweight, has high strength, and has high elastic modulus and also is superior in heat resistance and chemical resistance. Examples of the type of carbon fiber include pitch-based carbon fiber, polyacrylonitrile (PAN)-based carbon fiber, and rayon-based carbon fiber. Any of these types of carbon fiber may be used. PAN-based carbon fiber is more preferred in terms of the productivity of the carbon fiber.

Furthermore, in terms of the convergence of a carbon fiber bundle or in terms of improving the adhesion between the carbon fiber and the matrix resin in the obtained molded composite article, the carbon fiber may have, on its surface, about 0.01 mass% to 5 mass% of a substance containing a prescribed functional group. The carbon fiber may have one type of prescribed functional group or two or more types of prescribed functional groups. Examples of the prescribed functional group include epoxy group, hydroxyl group, amino group, carboxyl group, carboxylic acid anhydride group, acrylate group, and methacrylate group.

The carbon fiber is preferably high strength carbon fiber in terms of increasing the strength of the molded composite article. The high strength carbon fiber is carbon fiber that has a strand tensile strength of not less than 4 GPa, preferably not less than 4.6 GPa, and has a tensile elongation of not less than 1.5%. The strand tensile strength and the tensile elongation are determined by a strand tensile test in accordance with JIS R7608 (2007).

In order to form a planar reinforcing fiber base material, the reinforcing fiber is usually used in the form of a sheet or tape. Note that, for convenience of description, carbon fiber having a relatively large width is referred to as a sheet, whereas carbon fiber having a relatively narrow width is referred to as tape.

The reinforcing fiber base material can be in any of the following forms, for example: a form in which reinforcing fibers are unidirectionally aligned (such as a unidirectional material); woven fabric made of woven continuous fiber (such as a cloth material); and nonwoven fabric. The unidirectional material is preferred, because the unidirectional material allows the reinforcing fiber base material to have a sufficiently large amount of deformation and because the resulting molded article will have high strength because the unidirectional material is made of continuous fiber.

Examples of the unidirectional material include: a unidirectional material in which reinforcing fibers are oriented unidirectionally; and unidirectional woven fabric in which reinforcing fibers unidirectionally aligned are stitched. The unidirectional woven fabric means fabric in which reinforcing fibers unidirectionally oriented are stitched with auxiliary thread or the like.

Examples of the cloth material include bidirectional woven fabric and triaxial woven fabric. Examples of the bidirectional woven fabric include plain woven fabric, sateen woven fabric, and twill woven fabric. The cloth material is preferably plain woven fabric, twill woven fabric, or sateen woven fabric each of which is bidirectional woven fabric, because these easily undergo shear deformation.

The thickness of the reinforcing fiber, when used, is not limited. In a case where the reinforcing fiber is, for example, in the form of a sheet, the thickness of the reinforcing fiber is preferably not less than 0.03 mm, in terms of sufficiently maintaining the shape of the preformed preform. The thickness is, from the above point of view, more preferably not less than 0.1 mm, even more preferably not less than 0.2 mm. The thickness is preferably not more than 4 mm, more preferably not more than 2 mm, even more preferably not more than 1 mm, in terms of sufficiently increasing the preformability of the reinforcing fiber base material and sufficiently reducing the occurrence of wrinkles in the preform and the molded composite article.

### (Matrix resin composition)

The matrix resin composition contains a matrix resin. The matrix resin is not limited, and examples of the matrix resin include thermoplastic resins and thermosetting resins. The matrix resin has the function of, in a case where the matrix resin has been heated and cooled to solidify or harden and is present in the molded composite article, transferring a load to the reinforcing fiber. The matrix resin is a resin that constitutes a continuous resin phase in the reinforcing fiber base material. One type of matrix resin or two or more types of matrix resin may be used.

The thermoplastic resin, when heated, is in a highly viscous liquid state, and is capable of deforming freely in response to an external force. When the thermoplastic resin is cooled and the external force is removed, the thermoplastic resin solidifies into a solid state, and maintains its shape. This process can be repeated. The thermoplastic resin used as the matrix resin can be selected as appropriate from typical thermoplastic resins, provided that the thermoplastic resin does not cause significant deterioration in mechanical properties of the molded article.

Examples of the thermoplastic resin that can be used include polyolefin-based resins such as polyethylene resins and polypropylene resins, polyamide-based resins such as nylon 6 resin and nylon 6,6 resin, polyester-based resins such as polyethylene terephthalate resins and polybutylene terephthalate resins, polyphenylene sulfide resins, polyether ketone resins, polyether sulfone resins, and aromatic polyamide resins. Among the above resins, a polyamide resin, a polypropylene resin, or a polyphenylene sulfide resin is preferable in terms of physical properties and/or a price. One type of such resin can be used alone, or two or more types of such resins can be used in combination.

A thermosetting resin is a reactive polymer which, under the action of heat or a catalyst, undergoes a curing reaction through intermolecular crosslinking and forms an insoluble, infusible three-dimensional network. The thermosetting resin used as the matrix resin can be selected as appropriate from typical thermosetting resins, provided that the thermosetting resin does not cause significant deterioration in mechanical properties of the molded article.

Examples of the thermosetting resin include epoxy resins, unsaturated polyester resins, acrylic resins, vinyl ester resins, phenolic resins, phenoxy resins, alkyd resins, urethane resins, maleimide resins, cyanate resins, benzoxazine resins, epoxy acrylate resins, and urethane acrylate resins. One or more of the above resins can be selected as appropriate and used as the thermosetting resin. Among the above resins, epoxy resins are preferable because the epoxy resins tend to provide a high-strength cured product.

The amount of the matrix resin contained in the reinforcing fiber base material can be selected as appropriate, provided that a sufficient continuous phase is formed by the matrix resin in the reinforcing fiber base material. The amount is preferably not less than 20 mass%, more preferably not less than 25 mass%, in terms of reducing voids in the reinforcing fiber base material. The amount is preferably not more than 45 mass%, more preferably not more than 40 mass%, in terms of sufficiently improving the mechanical properties of the reinforcing fiber base material and achieving an appropriate level of tackiness of the reinforcing fiber base material.

The matrix resin composition may further contain other component(s) other than the foregoing matrix resin, provided that the effect of the present embodiment is achieved. The amount of such other component in the matrix resin composition can be selected as appropriate, provided that the effect of the present embodiment and the effect brought about by such some other component are achieved. Such other component may be selected as appropriate according to the type of matrix resin. One type of such other component or two or more types of such other component may be used. Examples of such other component include curing agents, curing aids, mold release agents, defoaming agents, ultraviolet absorbers, and filler.

For example, a curing agent is a component that can cause a curing reaction of a thermosetting resin as a matrix resin to proceed. In a case where an epoxy resin is used as the thermosetting resin, the curing agent is preferably an amine-based curing agent, because the cured epoxy resin will have high physical properties. The amine-based curing agent is an amino-containing compound or gives an amino-containing compound when decomposed. In the case where the thermosetting resin is an epoxy resin, an imidazole compound containing imidazole ring may be used as a curing agent and a urea compound containing urea group may be used as a curing aid in combination with the curing agent, in terms of increasing the curing speed. The imidazole compound can be used also as a curing aid.

The matrix resin composition can show various physical properties after curing, depending on the type and amounts of components in the composition. For example, by selecting an appropriate combination of the type of thermosetting resin and the type of curing agent, it is possible to impart fast curing properties to the matrix resin composition. A molded composite article produced from a preform containing such a matrix resin can be produced with high productivity, and has sufficiently good appearance and strength as described earlier. Therefore, such a molded composite article is advantageous for use in applications for automotive components such as: interior components facing the interior of an automobile or for partitioning the space inside the automobile; and structural members such as automobile frame components and drivetrain components.

### (Specific form of reinforcing fiber base material)

The reinforcing fiber base material can be selected as appropriate from known reinforcing fiber base materials, provided that the effect of the present embodiment is achieved.

Examples of the form of the reinforcing fiber base material include: a reinforcing fiber base material in the form of a sheet; a reinforcing fiber base material in the form of tape; and a base material in the form of a sheet obtained by arranging a plurality of pieces of tape-like reinforcing fiber base material. Examples of the reinforcing fiber base material in the form of a sheet include a unidirectional material and a cloth material.

The reinforcing fiber base material may contain a matrix resin composition impregnated therein. The matrix resin composition serves to transmit stress between reinforcing fibers. The presence of the matrix resin composition allows the reinforcing fibers to adhere to each other, thereby reducing deformation; however, the reinforcing fiber can deform due to a shearing force applied to the reinforcing fiber base material and transmitted to the reinforcing fiber. Therefore, the presence of the matrix resin composition is preferred in terms of achieving smooth deformation while reducing local meandering of the reinforcing fiber. In a case where a reinforcing fiber base material containing a matrix resin composition is used, the effect of the present invention can be maximized.

Examples of the reinforcing fiber base material impregnated with a resin include a unidirectional prepreg and a cloth prepreg obtained by impregnating a unidirectional material and a cloth material with a matrix resin composition, respectively. Examples of a reinforcing fiber base material in the form of tape impregnated with a resin include slit tape and a tow prepreg. As the reinforcing fiber base material in accordance with the present embodiment, any of the following can be suitably used: a unidirectional material, a cloth material, a unidirectional prepreg, a cloth prepreg, and a base material in the form of a sheet obtained by arranging pieces of tape-like reinforcing fiber base material.

The form of the reinforcing fiber base material may be a form other than those described above. A form other than those described above is, for example, a nonwoven fabric form. A reinforcing fiber base material in such other form, impregnated with a matrix resin composition, can be produced by the same production method as that for a unidirectional prepreg, except that reinforcing fiber in a different from is used. One type of reinforcing fiber base material may be used or two or more types of reinforcing fiber base material may be used in combination.

### <Unidirectional material>

A unidirectional material refers to reinforcing fibers aligned unidirectionally. A unidirectional material, kept in the form of woven fabric with auxiliary thread or the like, is unidirectional woven fabric. Use of unidirectional woven fabric is preferred in terms of handleability.

### <Unidirectional prepreg>

A unidirectional prepreg is composed of a unidirectional material and a matrix resin composition impregnated in the unidirectional material. The unidirectional material may be in the form of tape or in the form of a sheet. Alternatively, a unidirectional material in the form of a sheet may be cut along the reinforcing fiber into the form of tape to produce slit tape.

The unidirectional prepreg can be produced by a known method, and can be produced by, for example, a hot melt method. The hot melt method is a method that involves attaching a matrix resin composition in the form of a film to unidirectionally oriented reinforcing fiber bundles and impregnating the matrix resin composition into the reinforcing fiber bundles by applying heat and pressure to the matrix resin composition.

Note that, in the present specification, a layer-type prepreg sheet in which pieces of unidirectional tape overlap each other such that their reinforcing fiber orientation directions intersect each other is also referred to as a "unidirectional material (sheet)". For example, in the present specification, the following layer-type prepreg sheet is also referred to as a unidirectional material sheet: a layer-type prepreg sheet having two or more layers in which unidirectional layers (in each of which pieces of tape-like unidirectional material are arranged such that their reinforcing fiber orientation directions are parallel to each other) are stacked on top of each other such that the orientation directions of the respective layers intersect (for example, orthogonal to) each other.

### <Cloth material>

A cloth material is woven fabric made from a fiber material containing reinforcing fiber. Examples of the woven fabric include unidirectional woven fabric, bidirectional woven fabric, triaxial woven fabric, and non-crimp woven fabric. Unidirectional woven fabric is woven fabric in which reinforcing fibers are aligned in a required direction. Examples of bidirectional woven fabric include plain woven fabric, sateen woven fabric, and twill woven fabric. The woven fabric is preferably plain woven fabric, twill woven fabric, or sateen woven fabric, because these types of fabric easily undergo shear deformation.

### <Cloth prepreg>

A cloth prepreg is comprised of the foregoing cloth material and a matrix resin composition impregnated in the cloth material. Woven fabric for use in the cloth prepreg is preferably plain woven fabric, twill woven fabric, or sateen woven fabric because these types of fabric easily undergo shear deformation. The cloth prepreg can be produced by the same production method as that for a unidirectional material.

### <Slit tape>

Slit tape is a reinforcing fiber base material in the form of tape obtained by cutting a unidirectional prepreg along the reinforcing fiber orientation direction into a narrow strip. The slit tape is usually wound around a bobbin such as a paper core. The slit tape can be prepared by cutting a unidirectional prepreg into a strip with a dedicated slitter.

### <Tow prepreg>

A tow prepreg is comprised of a unidirectionally oriented reinforcing fiber bundle and a matrix resin composition impregnated in the bundle. The tow prepreg is typically a reinforcing fiber base material in the form of narrow tape. The reinforcing fiber bundle is made up of, for example, several thousands to several tens of thousands of filaments (continuous fiber) of reinforcing fiber which are unidirectionally aligned.

The tow prepreg can be produced by impregnating the reinforcing fiber bundle with the matrix resin composition. The thermosetting resin composition can be impregnated into the reinforcing fiber bundle by a known method. Examples of such a method of impregnating the matrix resin composition into the reinforcing fiber bundle include a resin bath method, a rotating roll method, an on-paper transfer method, and a nozzle dropping method.

The resin bath method includes, for example: the step of passing a reinforcing fiber bundle (tow) through a resin bath containing a matrix resin composition and thereby allowing the reinforcing fiber bundle to be impregnated with the matrix resin composition; and the step of squeezing excess matrix resin composition out of the reinforcing fiber bundle with an orifice or a roll etc. and thereby adjusting the amount of the matrix resin contained in the reinforcing fiber bundle.

The rotating roll method is a method by which a layer of a matrix resin composition is formed on a rotating roll and the layer is transferred to a tow. Examples of the rotating roll method include a method in which a rotating drum having a doctor blade is used as the rotating roll. The doctor blade regulates the amount of the matrix resin composition adhering to the rotating roll and regulates the thickness of the layer of the matrix resin composition.

The on-paper transfer method is a method by which a layer of a matrix resin composition is formed on paper and the layer is transferred to a tow.

The nozzle dropping method is disclosed in publications such as Japanese Patent Application Publication, Tokukaihei, No. 09-176346, Japanese Patent Application Publication, Tokukai, No. 2005-335296, and Japanese Patent Application Publication, Tokukai, No. 2006-063173.

The matrix resin composition in the tow prepreg is preferably impregnated uniformly in the reinforcing fiber bundle, in terms of reducing voids in the molded composite article and in terms of preventing or reducing deterioration in physical properties of the molded composite article. Among the foregoing methods for producing a tow prepreg, the rotating roll method is preferred in terms of controlling the amount of the matrix resin composition (containing a thermosetting resin as a matrix resin) supplied and easiness to carry out.

### <Base material in the form of a sheet obtained by arranging pieces of tape-like reinforcing fiber base material>

A base material in the form of a sheet in which a plurality of pieces of tape-like reinforcing fiber base material are arranged is formed from slit tape or tow prepreg. The base material in the form of a sheet includes, as a constituent unit, a unit layer obtained by arranging a plurality of pieces of tape-like base material along a direction orthogonal to the lengthwise direction of the tape. In a case where there are one or more gaps between adjacent ones of the plurality of pieces of tape-like reinforcing fiber base material, the base material in the form of a sheet is a stack of two or more of such unit layers. In a case where a stack of two or more of such unit layers is used, one or more of but not all of the unit layers may not have the gaps. In a case where the plurality of pieces of tape are arranged such that adjacent pieces of tape-like reinforcing fiber base material overlap each other at their side edges, a unit layer is used as the base material in the form of a sheet. Such base materials in the form of a sheet are collectively referred to as prepreg sheets.

In a case where there are one or more gaps between adjacent ones of the plurality of pieces of tape-like reinforcing fiber base material, the width of each gap can be selected as appropriate in terms of preventing or reducing the occurrence of defects (such as wrinkles) of the appearance of the preformed or molded product. For example, from the above point of view, the width of the gap may be 0.1% to 10% the width of the narrower one of the adjacent pieces of tape-like reinforcing fiber base material.

A prepreg sheet in which there are one or more longitudinal gaps between adjacent ones of the plurality of pieces of tape can be produced by the following method, for example. The method includes, for example: the step of forming a unit layer by arranging a plurality of pieces of tape-like reinforcing fiber base material such that the pieces have prescribed gap(s) between them; and the step of stacking a plurality of the unit layers such that the reinforcing fiber orientation directions of the respective unit layers intersect each other.

In a case where adjacent pieces of tape-like reinforcing fiber base material are arranged such that they overlap each other at their side edges, reinforcing fiber bundles are placed such that the relative positions of the reinforcing fiber bundles overlapping each other, resulting from the overlap of the pieces of tape-like reinforcing fiber base material, are maintained.

The overlap width of adjacent pieces of tape-like reinforcing fiber base material can be selected as appropriate in terms of preventing or reducing the occurrence of defects (such as wrinkles) of the appearance of the preformed or molded product and in terms of high strength. For example, from the above points of view, the overlap width may be 1% to 50% the width of a piece of tape-like reinforcing fiber base material.

A prepreg sheet in which adjacent pieces of tape-like reinforcing fiber base material are arranged such that they overlap each other at their side edges can be produced by the following method, for example. The method includes, for example: the step of forming a unit layer by arranging a plurality of pieces of tape-like reinforcing fiber base material such that they overlap each other by a prescribed overlap width at their side edges; and the step of stacking a plurality of the unit layers such that the reinforcing fiber orientation directions of the respective unit layers intersect each other.

### [Preform mold]

A preform mold is a mold for producing a preform. Specifically, a preform mold is a mold with which it is possible to preform a planar reinforcing fiber base material into the shape of a molded composite article (end product) or a shape close to the shape of the molded composite article. The preform mold may be the same as or different from a mold for producing the molded composite article, provided that it is possible to preform a reinforcing fiber base material into a preform. Note that the "shape close to the shape of the molded composite article" can be described as a shape that has been made close to the shape of the molded composite article to the extent that the preform can be put in the mold for molding the molded composite article and heat and pressure can be applied to the preform.

The preform mold can be a typical mold that includes a lower mold and an upper mold that has a shape corresponding to the lower mold. The upper mold and the lower mold may each be a single-part mold or may be splittable into a plurality of parts. Either an embodiment in which a reinforcing fiber base material is placed in the upper mold of the preform mold or an embodiment in which a reinforcing fiber base material is placed in the lower mold of the preform mold may be employed in the present embodiment; however, in the present embodiment, the reinforcing fiber base material is placed in the lower mold. It is preferable that the reinforcing fiber base material be workable in a mold, in terms of workability and productivity.

The preform mold may be a mold split into mold parts so that it is possible to carry out the foregoing first step, second step, and optionally the third step in the order named. For example, the preform mold may include: a lower mold; a first upper mold part that presses, toward the lower mold, a part of a reinforcing fiber base material which part is to be fixed in the first step and fix the part to the lower mold; a second upper mold part that presses, toward the lower mold, a predetermined part of a shear/compressive deformation zone of the reinforcing fiber base material in which the part to be fixed with the first upper mold part is fixed; and a third upper mold part that presses the reinforcing fiber base material toward the lower mold except for the parts of the reinforcing fiber base material pressed by the first upper mold part and the second upper mold part.

The first upper mold part, the second upper mold part, and the third upper mold part are configured to be capable of pressing the reinforcing fiber base material toward the lower mold in the order named. These upper mold parts may be configured to be capable of carrying out pressing independently. In such a case, the upper mold parts are operated manually or via automatic control so that the upper mold parts carry out pressing in the above order.

### [Specific aspect of method of producing preform]

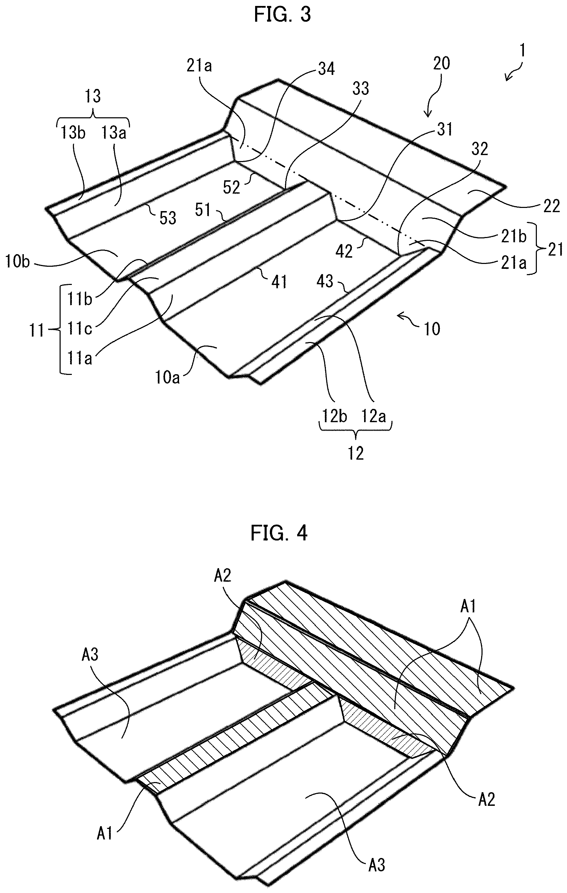

The following description will more specifically discuss a preform mold and the foregoing method of producing a preform, with reference to drawings. Fig. 3 schematically illustrates an example of a structure of a lower mold of a preform mold in accordance with the present embodiment. In the following description, a molded composite article is a floor pan for placement in an automobile, the preform is a preform for the floor pan, and the preform mold is a mold for producing the preform. Note that the preform and the floor pan (molded composite article) have a shape of an imprint of the inner surface of the lower mold (has substantially the same shape as the inner surface), because a reinforcing fiber base material in the form of a sheet is used.

### (Structure of preform mold)

The preform mold includes an upper mold and a lower mold 1. The lower mold 1 includes a corrugated structure 10 and a front raised portion 20 located at one end of the corrugated structure 10.

The corrugated structure 10 is a wavelike structure for reinforcement. The corrugated structure 10 includes: bottoms 10a and 10b; a long protrusion 11 lying between the bottoms; and peripheral protrusions 12 and 13 located at respective side edges of the corrugated structure 10.

Each of the bottoms 10a and 10b is constituted by a flat surface which is rectangle in plan view. The bottom 10a has a first side 41, a second side 42, and a third side 43, whereas the bottom 10b has a first side 51, a second side 52, and a third side 53. The first side 41 (51) and the third side 43 (53) are, for example, a pair of long sides of a rectangle, and the second side 42 (52) is, for example, a short side of the rectangle.

The long protrusion 11 is composed of: a wall 11a that extends upward from one side edge of the bottom 10a; a wall 11b that extends upward from the other side edge of the bottom 10b; and a top surface 11c lying between the walls. The walls 11a and 11b are such that their surfaces which make contact with the reinforcing fiber base material are sloping surfaces at an obtuse angle to surfaces of the bottoms 10a and 10b which make contact with the reinforcing fiber base material. The top surface 11c is composed of a flat surface parallel to the bottoms 10a and 10b.

The peripheral protrusion 12 includes: a wall 12a that extends upward from the other side edge of the bottom 10a; and a top surface 12b that is located at the top of the wall 12a. The wall 12a is such that its surface which makes contact with the reinforcing fiber base material is a sloping surface at an obtuse angle to the surface of the bottom 10a which makes contact with the reinforcing fiber base material. The top surface 12b is composed of a flat surface parallel to the bottom 10a. Similarly to the peripheral protrusion 12, the peripheral protrusion 13 includes a wall 13a and a top surface 13b.

The front raised portion 20 includes: a wall 21 that extends upward from one end of the corrugated structure 10; and a top surface 22 located at the top of the wall 21. The wall 21 is such that its surface which makes contact with the reinforcing fiber base material is a sloping surface at an obtuse angle to the surfaces of the bottoms 10a and 10b which make contact with the reinforcing fiber base material. The top surface 22 is composed of a flat surface parallel to the bottoms 10a and 10b.

At the bottom 10a (10b), the first side 41 (51) and the second side 42 (52) form a corner 31 (33), whereas the second side 42 (52) and the third side 43 (53) form a corner 32 (34). More specifically, there is the corner 31 formed at the intersection of the bottom 10a, the wall 11a, and the wall 21, and there is the corner 32 formed at the intersection of the bottom 10a, the wall 12a, and the wall 21. Similarly, there is the corner 33 formed at the intersection of the bottom 10b, the wall 11b, and the wall 21, and there is the corner 34 at the intersection of the bottom 10b, the wall 13a, and the wall 21.

The vertical positions of the top surfaces 11c, 12b, and 13b relative to the bottoms 10a and 10b are equal to each other. The top surface 22 is located higher than the other top surfaces. The vertical positions of these top surfaces may be 2 cm to 40 cm, although this depends on the specifications of a product. The angle at which the walls 11a, 11b, 12a, 13a, and 21 slope with respect to the bottoms 10a and 10b may be 30° to 90°, although this also depends on the specifications of the product. Note that a part of the wall 21 which part has a height that is equal to the distance from the bottoms 10a and 10b to the top surfaces 11c, 12b, and 13b is referred to as a lower portion 21a, whereas another part of the wall 21 which part is located higher than the top surfaces 11c, 12b, and 13b is referred to as an upper portion 21b.

As such, the lower mold 1 of the preform mold includes: the bottom 10a (10b) that includes the corner 31 (33) when seen in plan view; the wall 11a (11b) that extends upward from one side edge (the other side edge) of the bottom 10a (10b); and the wall 21 (lower portion 21a) that extends upward from one end of the bottom 10a (10b).

The bottom 10a (10b) of the lower mold 1 further includes the corner 32 (34) which is other than the corner 31 (33). The wall 21 extends upward from one end of the bottom 10a (10b) between the corner 31 (33) and the corner 32 (34). The lower mold 1 further includes, at the other side edge (one side edge) of the bottom 10a (10b), the wall 12a (13a) that extends upward on the opposite side of the corner 32 (34) from the wall 21.

### (Production of preform)

Next, the following description will discuss production of a preform using the lower mold 1 of the preform mold. Fig. 4 illustrates parts of the lower mold 1 which parts act on a reinforcing fiber base material during the process of producing the preform.

First, a planar reinforcing fiber base material or a reinforcing fiber base material impregnated with a matrix resin composition is placed on the lower mold 1 of the preform mold. In the following description, a "reinforcing fiber base material or a reinforcing fiber base material impregnated with a matrix resin composition" may be referred to as a "reinforcing fiber base material (impregnated with resin)". It is noted here that the reinforcing fiber base material is, for example, a unidirectional material or a unidirectional prepreg. The unidirectional material or unidirectional prepreg used here is a laminate of a plurality of sheets of unidirectional material or unidirectional prepreg stacked such that fiber directions intersect each other. Since fiber directions intersect each other, the resulting preform is less prone to cracking and easy to handle.

The reinforcing fiber base material impregnated with a matrix resin composition may have been heated on the lower mold 1, provided that the heating is effective to softening the matrix resin composition contained in the reinforcing fiber base material. The temperature of the reinforcing fiber base material at the time of heating can be selected as appropriate according the purpose of softening and according to the type of reinforcing fiber base material. For example, in a case where the matrix resin composition in the reinforcing fiber base material contains a thermosetting resin, in terms of softening the reinforcing fiber base material without causing a thermosetting reaction to proceed, the temperature of the reinforcing fiber base material impregnated with the matrix resin composition at the time of heating may be 40°C to 100°C, more preferably 50°C to 80°C, although this depends on the combination of the resin and a curing agent.

The reinforcing fiber base material (impregnated with a resin) can be heated with use of a known heating apparatus. In terms of preventing the lower mold 1 from being heated or reducing the extent to which the lower mold 1 is heated, the heating apparatus is preferably an apparatus that is capable of heating the reinforcing fiber base material (impregnated with a resin) in a short time. For such a reason, the heating apparatus is preferably an infrared heater. An infrared heater is usually capable of raising the temperature of the reinforcing fiber base material to the foregoing temperature by carrying out about 30 seconds of heating, and makes it possible to sufficiently soften the reinforcing fiber base material (impregnated with a resin). Note that, when the reinforcing fiber base material (impregnated with a resin) is substantially heated, the lower mold 1 shows the action of cooling the heated and softened reinforcing fiber base material (impregnated with a resin). This makes it easier to recover, from the lower mold 1, the reinforcing fiber base material (impregnated with a resin) which has softened and more deformed to conform to the shape of the lower mold.

The reinforcing fiber base material (impregnated with a resin) has preferably been shaped to the extent that the reinforcing fiber base material (impregnated with a resin) will not protrude excessively from the lower mold 1 of the preform mold during preforming. The reinforcing fiber base material (impregnated with a resin) may have appropriate cut(s) in order to increase its conformity to the lower mold of the preform mold during preforming.

Next, a part of the reinforcing fiber base material which part corresponds to a fix portion A1 of the lower mold 1 of the preform mold (the foregoing top surface 22, upper portion 21b, and top surface 11c) is fixed to the fix portion A1 with use of a fixing means such as heat-resistant adhesive tape. As described earlier, the fixing may be achieved using the tackiness of the reinforcing fiber base material or using vacuum suction.

Next, the reinforcing fiber base material (impregnated with a resin), which is fixed at the fix portion A1 to the lower mold 1 of the preform mold, is pressed toward a compressive deformation portion A2 (the foregoing lower portion 21a). This is to assist a part of the reinforcing fiber base material (impregnated with a resin) which part corresponds to the bottom 10a (10b) to be drawn toward the lower portion 21a, because the dimension in the lengthwise direction of the top surface 11c and the dimensions in the lengthwise direction of the lower portion 21a and the bottom 10a (10b) are different. As a result, shear deformation occurs at the wall 11a. For the above-stated purpose, this pressing can be achieved by, for example, moving, toward the lower mold 1, a part of the upper mold (which corresponds to the lower mold 1) which part corresponds to the compressive deformation portion A2 and causing that part of the upper mold to carry out pressing; however, provided that the drawing can be achieved while causing shear deformation in the base material, some other portion such as press portions A3 may be pressed toward the bottoms 10a and 10b. Some other apparatus for pressing may be used. In terms of increasing the conformity of the reinforcing fiber base material to the compressive deformation portion A2, the reinforcing fiber base material may be pressed toward the lower portion 21a via an elastic member.

It is preferable that the pressing be carried out such that the reinforcing fiber base material (impregnated with a resin) abuts the compressive deformation portion A2 while deforming within the range of the amount of deformation, in terms of preventing or reducing wrinkles in the reinforcing fiber base material (impregnated with a resin). For example, the pressing against the compressive deformation portion A2 may be carried out at a rate of 10 mm/second to 150 mm/second, and may be carried out under the conditions in which the temperature of the prepreg (reinforcing fiber base material impregnated with a resin) is 50°C to 100°C. The force of pressing against the compressive deformation portion A2 may be 0.005 MPa to 0.05 MPa, preferably 0.02 MPa to 0.03 MPa, in terms of sufficiently preforming the reinforcing fiber base material at the compressive deformation portion A2. The time for which the pressing is carried out may be such that the prepreg is sufficiently cooled and the mold can be opened.

The fix portion A1 is located higher than the compressive deformation portion A2. Therefore, in a case where the pressing is carried out with the upper mold, the fix portion A1 is located shallower and the compressive deformation portion A2 is located deeper along the direction in which the upper mold advances (the direction in which pressing is carried out).

Upon being pressed against the compressive deformation portion A2, a part of the reinforcing fiber base material which part corresponds to the walls 11a and 11b undergoes shear deformation toward the front raised portion 20 from its part fixed at the top surface 11c. Furthermore, upon being pressed against the compressive deformation portion A2, the reinforcing fiber base material undergoes shear deformation and compressive deformation at the compressive deformation portion A2 (lower portion 21a) between the sloping wall 11a (11b) and wall 12a (13a). As such, by pressing against the compressive deformation portion A2, it is possible to cause both shear deformation and compressive deformation in the reinforcing fiber base material.

Next, a press portion A3 (a part of the reinforcing fiber base material which part has not been fixed or pressed) is pressed toward the lower mold 1 of the preform mold. This pressing can be carried out by causing the upper mold to move toward and engage with the lower mold 1 of the preform mold. In this way, the reinforcing fiber base material is pressed against the entire surface of the lower mold 1 of the preform mold, and preformed into the shape of the inner surface of the lower mold of the preform mold. The force of pressing against the entire surface of the lower mold 1 of the preform mold may be 0.005 MPa to 0.05 MPa, preferably 0.02 MPa to 0.03 MPa, and the time for which the pressing is carried out may be such that the prepreg is sufficiently cooled and the mold can be opened.

The pressing against the entire surface of the lower mold 1 of the preform mold may not be carried out in a case where the pressing against the compressive deformation portion A2 suffices in sufficiently preforming the reinforcing fiber base material. The pressing against the entire surface of the lower mold 1 of the preform mold may be carried out after the pressing against the compressive deformation portion A2 is temporarily stopped. For example, the pressing against the entire surface of the lower mold 1 of the preform mold may be carried out after the reinforcing fiber base material pressed against the compressive deformation portion A2 is temporarily removed from the lower mold 1 of the preform mold and then the pressed reinforcing fiber base material is placed again in the lower mold 1 of the preform mold.

In this way, a planar reinforcing fiber base material is pressed against the lower mold 1 of the preform mold, the reinforcing fiber base material is caused to at least partially undergo shear deformation and compressive deformation, and thereby the reinforcing fiber base material is preformed into a three-dimensional shape. In this way, a preform, obtained by imprinting the shape of the inner surface of the lower mold 1 of the preform mold in the reinforcing fiber base material, is produced.

As has been described, in the production of a preform, a part of the reinforcing fiber base material (impregnated with a resin) which part abuts the fix portion A1 is fixed. The part of the reinforcing fiber base material which part corresponds to the fix portion A1 serves as an edge of the subsequent shear deformation or a part adjacent to the edge, or an edge of compressive deformation or a part adjacent to the edge, as described earlier. Then, the fixed reinforcing fiber base material (impregnated with a resin) is pressed toward the compressive deformation portion A2. As such, during the pressing, a part of the reinforcing fiber base material (impregnated with a resin) in which part the amount of compressive deformation is relatively large has a force in out-of-plane direction(s) applied thereto. In this way, the reinforcing fiber base material (impregnated with a resin) is preformed without lifting at a part corresponding to a complex three-dimensional shape in which shear deformation and compressive deformation can concurrently occur during preforming and with substantially no wrinkles.

It can also be said that the compressive deformation portion A2 is located lower than the fix portion A1. When the compressive deformation portion A2 and the fix portion A1 are expressed using the terms "recess" and "protrusion", it can be said that the compressive deformation portion A2 is a recessed portion and the fix portion A1 is a protruding portion. The fix portion A1 (corresponding to the protruding portion) is pressed first and then the compressive deformation portion A2 (corresponding to the recessed portion) is pressed, thereby allowing shear/compressive deformation to occur in the recessed portion in the vicinity of the protruding portion. With this, the reinforcing fiber base material is preformed into a predetermined shape, and the occurrence of wrinkles in the preformed reinforcing fiber base material (impregnated with a resin) is prevented.

Furthermore, during the foregoing production of a preform, the reinforcing fiber base material (impregnated with a resin) is pressed against the entire lower mold 1 of the preform mold after being pressed against the compressive deformation portion A2. With this, the reinforcing fiber base material (impregnated with a resin) even more sufficiently conforms to the lower mold and is more sufficiently preformed.

Furthermore, in the foregoing production of a preform, the lower mold 1 of the preform mold, for example, includes, when seen in plan view: the bottom 10a which includes at least one corner 31; and the walls 11a and 21 extending upward from edges of the bottom 10a. The corner 31 is formed by the first side 41 and the second side 42. Therefore, in a case where a planar reinforcing fiber base material is pressed against the lower mold 1 to be preformed, the reinforcing fiber base material undergoes both deformation resulting from shearing and deformation resulting from compression when pressed. For example, if shear deformation occurs at the wall 11a, compressive deformation occurs at the wall 21 (lower portion 21a) toward which the shear deformation is directed. Thus, in the production of a preform using a lower mold 1 that includes the foregoing structure, the foregoing effect of preventing or reducing the occurrence of wrinkles can be more apparent.

In a case where the lower mold 1 of the preform mold further includes the following configuration, the effect of preventing or reducing the occurrence of wrinkles can be even more apparent in producing a preform. Specifically, the bottom 10a (10b) further includes (i) another corner 32 (34) other than the corner 31 (33) and (ii) a third side 43 (53) other than the first side 41 (51) and the second side 42 (52). The another corner 32 (34) is formed by the second side 42 (52) and the third side third side 43 (53); and the lower mold 1 further includes a wall 12a (13a) that extends upward from the third side 43 (53). In such a case in which the lower portion 21a is located between the sloping wall 11a (11b) and the sloping wall 12a (13a), more apparent compressive deformation can occur at the lower portion 21a of the reinforcing fiber base material. Thus, in the production of a preform using the lower mold 1 that further includes the foregoing structure, the foregoing effect of preventing or reducing the occurrence of wrinkles can be even more apparent.

Furthermore, in the foregoing production of a preform, the walls of the lower mold 1 of the preform mold each have a sloping surface at an obtuse angle to the inner surfaces of the bottoms 10a and 10b. Therefore, at the lower portion 21a, the compressive deformation of the reinforcing fiber base material becomes greater with decreasing distance to the bottom. Thus, in the production of a preform, the foregoing effect of preventing or reducing the occurrence of wrinkles can be even more apparent.

Furthermore, in the foregoing production of a preform, a unidirectional material or unidirectional prepreg is used as the reinforcing fiber base material, and therefore the reinforcing fiber base material can be caused to deform more greatly. The reinforcing fiber base material may be a cloth material, a cloth prepreg, and/or a prepreg sheet. Use of any of these reinforcing fiber base materials makes it possible to produce a molded composite article having desired mechanical properties with high productivity.

Note that, in a case where a reinforcing fiber base material is used, the reinforcing fiber base material may need to deform by an amount exceeding the amount of deformation of the reinforcing fiber base material (this is described later). In such a case, when carrying out pressing against the compressive deformation portion A2, a zone to undergo shear deformation (such as a part that abuts the wall 11a or 11b) of the reinforcing fiber base material may be caused to undergo shear deformation exceeding the amount of deformation of the reinforcing fiber base material. In such a case, in the vicinity of a part of the reinforcing fiber base material where shear deformation or compressive deformation occurs, out-of-plane deformation can be induced in a part where the amount of deformation is sufficiently small. As a result, the amount of deformation in this vicinity becomes large, whereas the amount of deformation in a part that undergoes large shear deformation or compressive deformation is substantially within the range of the amount of deformation that the reinforcing fiber base material has. Thus, a sufficiently good preform can be produced even with use of a reinforcing fiber base material having an amount of deformation less than the amount of deformation required for the shape of a to-be-produced preform.

A preform produced in the present embodiment is suitably used in the production of a molded composite article as a material for the molded composite article.

### [Method of producing molded composite article]

A method of producing a molded composite article in accordance with the present embodiment includes the steps of: producing a preform by the foregoing method of producing a preform in accordance with the present embodiment; and producing a molded composite article by applying heat and pressure to the preform. The method of producing a molded composite article in accordance with the present embodiment can be carried out in the same manner as a known method of producing a molded composite article, except that the foregoing preform in accordance with the present embodiment is used as a preform. For example, the step of applying heat and pressure to the preform can be carried out in the following manner.

First, a preform is placed in a lower mold of a metal mold whose temperature has been adjusted. Next, an upper mold of the metal mold whose temperature has been adjusted is caused to approach the preform, the upper mold and the lower mold are engaged with each other with the preform therebetween, and pressure is applied. The temperature of the metal mold is preferably 100°C to 170°C, more preferably 130°C to 150°C, although it depends on a matrix resin composition used or the combination of the matrix resin composition and a curing agent. The temperatures of the upper mold and the lower mold may be the same or different, but are preferably the same. The contact pressure at the metal mold during molding is preferably 1 MPa to 15 MPa, more preferably 4 MPa to 10 MPa. The metal mold mentioned here may be a preform mold if possible, but is, for example, a mold for molding.

The preform is cooled after allowed to harden or soften by applying heat and pressure with the mold for molding in this way, and thereby the preform is allowed to harden or solidify. The time for which molding is carried out is preferably 1 minute to 15 minutes, more preferably 2 minutes to 5 minutes. With this, a molded composite article having a predetermined shape is produced.

The time for which molding is carried out can be selected appropriately according to the productivity required for the molded composite article and the selection of material(s) for achieving the productivity. For example, by appropriately selecting a matrix resin composition that contains a thermosetting resin for automotive products, it is possible to produce a molded composite article for automotive products by carrying out the foregoing application of heat and pressure for 150 seconds to 600 seconds.

With regard to the molded composite article produced by the production method in accordance with the present embodiment, the preform has been allowed to solidify by the application of heat and pressure, and therefore the occurrence of wrinkles and meandering of reinforcing fiber during the molding is prevented or reduced. Furthermore, there are few disconnections in reinforcing fiber bundles of the molded composite article, and therefore oneness is maintained. Thus, the production method in accordance with the present embodiment makes it possible to produce a molded composite article having good appearance and desired mechanical properties. Furthermore, the production method in accordance with the present embodiment at least does not necessitate cutting the reinforcing fiber base material in order to divide the reinforcing fiber base material in advance, and therefore is superior in productivity to conventional production methods which require such dividing.

Note that, in the present embodiment, a molded composite article may be produced from a reinforcing fiber base material that contains a matrix resin composition, without preparing the foregoing preform from the reinforcing fiber base material. Specifically, a method of producing a molded composite article in accordance with the present embodiment includes the foregoing first step and second step, and may further include a molding step including applying heat and pressure to the reinforcing fiber base material, which is receiving a force in out-of-plane direction(s), and then cooling the reinforcing fiber base material to obtain a molded composite article.

The steps of the production method can be carried out in the same manner as the foregoing first step and second step, provided that the molded composite article can be produced. For example, in the first step and the second step, a reinforcing fiber base material impregnated with a matrix resin composition may be pressed with an appropriate pressing force with a mold having an appropriate shape so that the reinforcing fiber base material is formed into the shape of a molded composite article. The molding step may be carried out in the same manner as the foregoing "step of producing a molded composite article by applying heat and pressure to the preform". For example, the molding step may involve applying heat and pressure to a reinforcing fiber base material impregnated with a matrix resin composition fixed with a mold at a sufficient temperature and for a sufficient period of time for producing a molded composite article from the reinforcing fiber base material.

In the present embodiment, a molded composite article having good appearance and desired mechanical properties can be produced with use of a shaping mold similar to the preform mold, also by such a method of producing a molded composite article directly from a reinforcing fiber base material (impregnated with a resin) without preparing a preform from the reinforcing fiber base material. Such a method of producing a molded composite article can be carried out in the same manner as, for example, the foregoing method of producing a preform using a preform mold. Furthermore, since this production method at least does not necessitate cutting a reinforcing fiber base material for dividing the reinforcing fiber base material, this production method is superior in productivity to conventional production methods that necessitate such dividing. Furthermore, this production method does not involve producing a preform, and therefore operations for producing a molded composite article from the preform can be skipped. Therefore, this production method is superior in productivity.

### [Mold]

A preform or molded composite article in accordance with the present embodiment can be suitably produced with use of a mold described below.

The mold in accordance with the present embodiment includes an upper mold and a lower mold. The upper mold and the lower mold may be arranged on top of each other along the direction of gravitational force, and may be placed upright or inclined. In such cases, one of the two molds which engage with each other is referred to as an upper mold. In consideration of the fact that a matrix resin composition flows due to heat and pressure applied, the upper and lower molds are preferably placed such that the molds open and close along the direction of gravitational force so that the matrix resin composition will have no missing parts not only because of the flow but also because of the gravitational force. The upper mold and the lower mold, when engage with each other, form an internal space having substantially the same shape as a molded article. At least one of the upper and lower molds has a recess for forming the internal space.

One or both of the upper mold and the lower mold is/are composed of mold parts. Mold parts constitute an upper or lower mold, and are configured to be independently moveable. Each mold part is configured to be, for example, capable of moving forward and backward along the direction along which the upper mold and the lower mold face each other. The upper mold may be composed of mold parts, the lower mold may be composed of mold parts, and each of the upper and lower molds may be composed of mold parts.

The mold in accordance with the present embodiment includes at least two mechanisms for causing the mold parts to move. The two mechanisms may be referred to as a first mechanism and a second mechanism.

The first mechanism is a mechanism which causes a portion of the mold parts to fix a predetermined part of a reinforcing fiber base material to the lower mold. The predetermined part is at least one of (i) an edge of a zone of a planar reinforcing fiber base material containing reinforcing fiber which zone is to be subjected to shear deformation and/or compressive deformation by the portion of the mold parts and (ii) a part adjacent to the zone. The first mechanism can be formed using an apparatus that is capable of causing a portion of the mold parts to advance toward the lower mold. For example, the first mechanism is constituted by (a) predetermined mold part(s) and (b) actuator(s) that causes the mold part(s) to move toward the lower mold and move away from the lower mold (move forward and backward along an out-of-plane direction of the reinforcing fiber base material). Examples of the actuator include power cylinders. Examples of the power cylinders include air cylinders and hydraulic cylinders.

The second mechanism is a mechanism that causes another portion of the mold parts to apply, to a zone of a reinforcing fiber base material which zone is to undergo shear deformation and/or compressive deformation, a force in an out-of-plane direction of the reinforcing fiber base material. Similarly to the first mechanism, the second mechanism can be constituted by (i) predetermined mold part(s) and (b) actuator(s) that causes the mold part(s) to move toward the lower mold and move away from the lower mold.

The mold, which includes the above-described features, is therefore capable of carrying out the foregoing first step and second step. The mold may further include some other feature(s), and may have additional function(s), in terms of carrying out the foregoing production method, provided that the effect of the present embodiment can be obtained.

For example, the mold parts may further include a third mechanism configured to cause the another portion of the mold parts to move in an in-plane direction of the reinforcing fiber base material. The third mechanism is a mechanism that is capable of carrying out the foregoing movement assisting step. Specifically, for example, when a certain part of the reinforcing fiber base material deforms in an out-of-plane direction and accordingly its surrounding part moves in an in-plane direction toward that certain part, the third mechanism assists such movement of the surrounding part in the in-plane direction.

Thus, examples of the third mechanism include a mechanism that causes the mold part(s) and the second mechanism to move in in-plane direction(s) in which the reinforcing fiber base material in the mold moves. The "in-plane direction(s) in which the reinforcing fiber base material in the mold moves" can be selected as appropriate according to the shape of the mold and the part to be fixed. For example, the "in-plane direction(s) in which the reinforcing fiber base material in the mold moves" can be determined uniquely when the reinforcing fiber base material deforms in one in-plane direction. If the reinforcing fiber base material deforms in a plurality of in-plane directions, the "in-plane direction(s) in which the reinforcing fiber base material in the mold moves" may be all of such a plurality of in-plane directions. Alternatively, the "in-plane direction(s) in which the reinforcing fiber base material in the mold moves" may be one or some of the plurality of in-plane directions determined based on the amounts of deformation of the reinforcing fiber base material in the plurality of in-plane directions.

Furthermore, the amount by which the second mechanism is caused to move by the third mechanism in in-plane direction(s) can be selected appropriately according to the amount of deformation of a part that deforms in out-of-plane direction(s) and the area of its surrounding part. For example, the amount by which the second mechanism is caused to move by the third mechanism in in-plane direction(s) can be the amount which sufficiently reduces the occurrence of wrinkles during molding in the part that deforms in the out-of-plane direction(s). The amount by which the surrounding part moves tends to become larger when the amount of deformation of the part that deforms in the out-of-plane direction(s) is larger, and tends to become smaller when the amount of deformation of the part that deforms in the out-of-plane direction(s) is smaller.

Examples of the third mechanism include a mechanism configured to cause the another portion of the mold parts to move along a rail extending along an in-plane direction. The mechanism is capable of causing the reinforcing fiber base material to move in the in-plane direction independently of causing another part of the reinforcing fiber base material to deform in out-of-plane direction(s) as described earlier. Note that the direction in which the rail extends can be selected as appropriate so that the mold part can move along a desired direction, and may be an in-plane direction, an out-of-plane direction, or a direction at an angle to the in-plane direction.

The mold may be configured such that the foregoing second mechanism further has the function of the foregoing third mechanism. For example, the second mechanism may be capable of also moving forward and backward along an in-plane direction. Examples of such a configuration include a configuration in which the foregoing power cylinder mentioned as the second mechanism is disposed in an inclined state so that the power cylinder moves forward and backward along both an out-of-plane direction and in-plane direction of the reinforcing fiber base material.

The power cylinder is capable of causing a mold part to move forward and backward along an out-of-plane direction and also causing the mold part to move forward and backward along a specific in-plane direction by a specific distance. The in-plane direction in which the mold part is caused to move by the power cylinder can be determined by, for example, directing the axis of the power cylinder in a desired in-plane direction. The amount by which the mold part is caused to move by the power cylinder in the in-plane direction (the distance traveled) can be controlled by, for example, controlling the angle of the axis of the power cylinder to the in-plane direction.

The configuration in which the second mechanism also serves as the third mechanism, as described above, is capable of expanding functionality of the mold with a simpler configuration. Furthermore, with the configuration, the reinforcing fiber base material is caused to deform by the second mechanism in out-of-plane direction(s) while the movement of the reinforcing fiber base material in in-plane direction(s) is carried out to complement the deformation in the out-of-plane direction(s). The configuration is therefore preferred in terms of stably producing a preform or molded composite article with higher quality.

Note that the lower mold may also have mold parts similar to the upper mold. In such a case, the mold may further include any of the foregoing first, second, and third mechanisms for one of, some of, or all of the mold parts of the lower mold. Such a configuration in which the lower mold also has mold parts is more preferred in terms of reliably carrying out the first step, second step, and movement assisting step described earlier with regard to the production method, during the production of a preform having a complex shape.

The following description will discuss the foregoing mold having mold parts, in more detail. The mold forms an internal space having substantially the same shape as a mold for producing the foregoing preform of an automotive in-car floor pan.

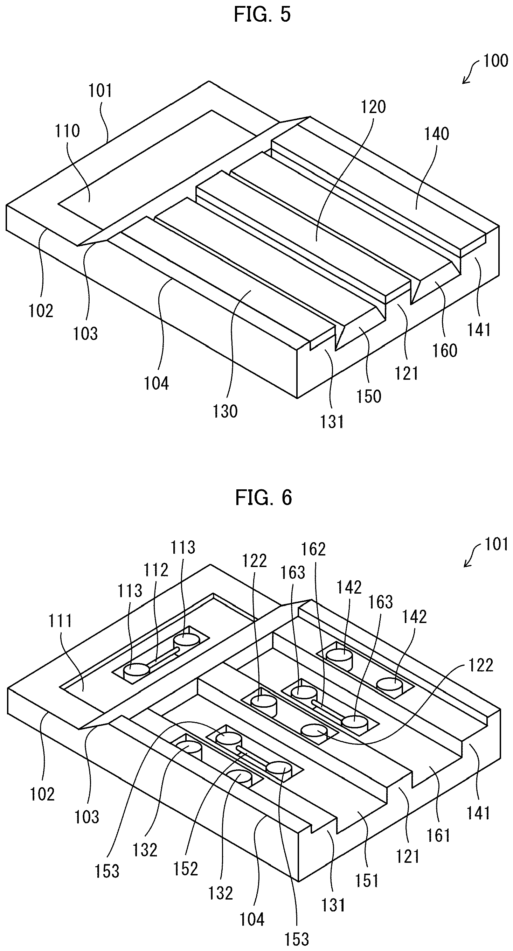

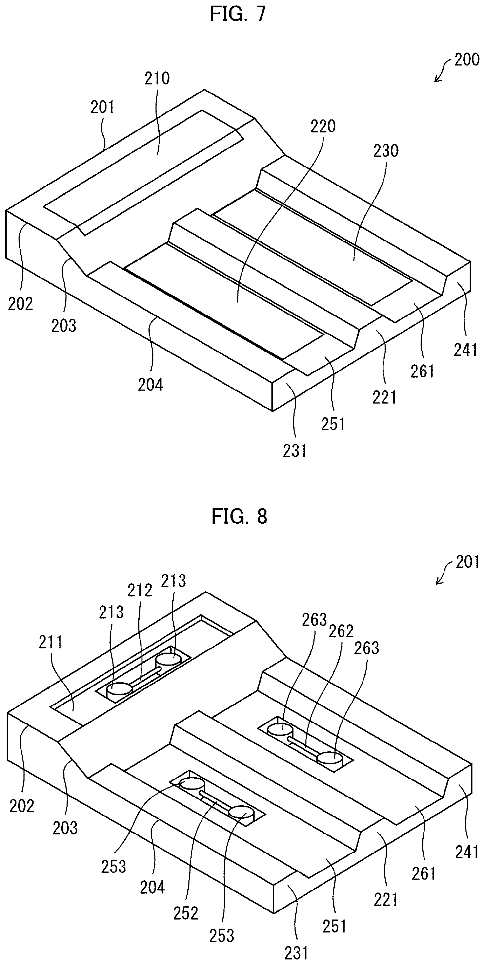

Fig. 5 schematically illustrates an example of a configuration of an upper split mold of a mold in accordance with an embodiment of the present invention. For easy understanding, the upper split mold is illustrated upside down. Fig. 6 schematically illustrates the upper split mold such that driving sections of the upper split mold illustrated in Fig. 5 are visible. Cylinders are illustrated as examples of the driving sections. Fig. 7 schematically illustrates an example of a configuration of a lower split mold of the mold in accordance with an embodiment of the present invention. Fig. 8 schematically illustrates the lower split mold such that driving sections of the lower split mold illustrated in Fig. 7 are visible from the lower mold. Similarly to Fig. 6, cylinders are illustrated as examples of the driving sections.

### [Configuration of upper mold]

As illustrated in Fig. 5, an upper split mold 100 includes an upper split mold body 101, a first part of the upper split mold (hereinafter also referred to as "first mold part") 110, a second part of the upper split mold (hereinafter also referred to as "second mold part") 120, a third part of the upper split mold (hereinafter also referred to as "third mold part") 130, a fourth part of the upper split mold (hereinafter also referred to as "fourth mold part") 140, a fifth part of the upper split mold (hereinafter also referred to as "fifth mold part") 150, and a sixth part of the upper split mold (hereinafter also referred to as "sixth mold part") 160. The upper split mold body 101 includes a low portion 102, a sloping portion 103, and a high portion 104 which are arranged from one end to the other.

Note that, in the descriptions about the mold, the direction along which the low portion 102, the sloping portion 103, and the high portion 104 are arranged may be referred to as "lengthwise direction", whereas a direction orthogonal to the lengthwise direction when the upper split mold 100 or a lower split mold 200 is seen in plan view may be referred to as "widthwise direction". Furthermore, surfaces of the upper split mold 100 and the lower split mold 200 in the following descriptions preferably have been treated to have a releasing property. The treatment to impart a releasing property is, for example, coating with a slip assistance film or the like such as release tape, release coating, or a fluororesin film. Therefore, the surfaces of the upper split mold 100, the lower split mold 200, and the mold parts (describe later) each have a surface layer that has an excellent releasing property.

### (Configuration of low portion)

The first mold part 110 is a plate-like member that extends along the widthwise direction in the low portion 102 of the upper split mold body 101. The first mold part 110 is made of, for example, aluminum. The first mold part 110 has been processed into a shape that has one edge extending along the sloping surface of the sloping portion 103.

As illustrated in Fig. 6, the low portion 102 has a first recess 111 for accommodation of the first mold part 110. The first recess 111 has a recess-for-first-driving-section 112 formed therein, and the recess-for-first-driving-section 112 has two power cylinders 113 placed therein. The power cylinders 113 are, for example, air cylinders. Each of the power cylinders 113 is disposed such that the piston moves forward and backward along the vertical direction orthogonal to an in-plane direction of the upper split mold body 101. The first mold part 110 is fixed to ends of the pistons.

### (Configuration of high portion)

The upper split mold body 101 has, in the high portion 104, a first long protrusion 121, a second long protrusion 131, and a third long protrusion 141. The first long protrusion 121 is placed in the middle of the upper split mold body 101 in the widthwise direction. The first long protrusion 121 has two power cylinders 122. Each of the power cylinders 122 is disposed such that the piston moves forward and backward along the vertical direction. The second mold part 120 is fixed to ends of the pistons. The second mold part 120 is, for example, a plate-like member that is to be disposed on the top surface of the first long protrusion 121, and is made of aluminum.

The second long protrusion 131 is formed along one side of the upper split mold body 101 in the high portion 104, and the third long protrusion 141 is formed along the opposite side of the upper split mold body 101 in the high portion 104. The second long protrusion 131 and the third long protrusion 141 have two power cylinders 132 and two power cylinders 142, respectively. Each of the power cylinders 132 and 142 is disposed such that the piston moves forward and backward along the vertical direction. The third mold part 130 is fixed to ends of the pistons in the second long protrusion 131, and the fourth mold part 140 is fixed to ends of the pistons in the third long protrusion 141. The third mold part 130 and the fourth mold part 140 are plate-like members that are to be disposed on the top surfaces of the second long protrusion 131 and the third long protrusion 141, respectively, and are made of aluminum.

The upper split mold body 101 has a second recess 151 and a third recess 161 in the high portion 104. The second recess 151 has a recess-for-second-driving-section 152 formed in the middle thereof, and the recess-for-second-driving-section 152 has two power cylinders 153 placed therein. The fifth mold part 150 is fixed to ends of the two power cylinders 153. The fifth mold part 150 is, for example, a member substantially having the shape of a trapezoid accommodated in the second recess 151, and is made of aluminum.

The third recess 161 has a recess-for-third-driving-section 162 formed therein, and the recess-for-third-driving-section 162 has two power cylinders 163 placed therein. The sixth mold part 160 is fixed to ends of the two power cylinders 163. The sixth mold part 160 is, for example, a member substantially having the shape of a trapezoid accommodated in the third recess 161, and is made of aluminum.

In the upper split mold 100, the surfaces of the first mold part 110 to the sixth mold part 160, when the foregoing pistons have moved fully backward, are substantially flush with the surface of the upper split mold body 101 in the vicinities of the mold parts.

### [Configuration of lower mold]

As illustrated in Fig. 7, the lower split mold 200 has a lower split mold body 201, a seventh part of the lower split mold (hereinafter also referred to as "seventh mold part") 210, an eighth part of the lower split mold (hereinafter also referred to as "eighth mold part") 220, and a ninth part of the lower split mold (hereinafter also referred to as "ninth mold part") 230. The lower split mold body 201 includes a high portion 202, a sloping portion 203, and a low portion 204 which are arranged from one end to the other end. The high portion 202 corresponds to the foregoing top surface 22, the sloping portion 203 corresponds to the foregoing wall 21, and the low portion 204 corresponds to the foregoing corrugated structure 10.

### (Configuration of high portion)

The seventh mold part 210 is a plate-like member that extends along the widthwise direction in the high portion 202 of the lower split mold body 201. The seventh mold part 210 is made of, for example, aluminum. The seventh mold part 210 has one side cut away so as to be flush with the sloping surface of the sloping portion 203.

As illustrated in Fig. 8, the high portion 202 has a first recess 211 for accommodation of the seventh mold part 210. The first recess 211 has a recess-for-seventh-driving-section 212 formed therein, and the recess-for-seventh-driving-section 212 has two power cylinders 213 placed therein. Each of the power cylinders 213 is disposed such that the piston moves forward and backward along the direction orthogonal to an in-plane direction of the lower split mold body 201. The seventh mold part 210 is fixed to ends of the pistons.

### (Configuration of low portion)

The lower split mold body 201 has, in the low portion 204, a first long protrusion 221, a second long protrusion 231, and a third long protrusion 241. The first long protrusion 221 is disposed in the middle of the lower split mold body 201 in the widthwise direction. The surface of the first long protrusion 221 is coated with, for example, an aluminum sheet. The first long protrusion 221 corresponds to the foregoing long protrusion 11.

The second long protrusion 231 is formed along one side of the lower split mold body 201 in the low portion 204, and the third long protrusion 241 is formed along the opposite side of the lower split mold body 201 in the low portion 204. The surface of the second long protrusion 231 and the surface of the third long protrusion 241 are each covered with, for example, an aluminum sheet. The second long protrusion 231 and the third long protrusion 241 correspond to the foregoing peripheral protrusions 12 and 13.

The lower split mold body 201 has a second recess 251 and a third recess 261 in the low portion 204. The second recess 251 has a recess-for-second-driving-section 252 formed in the middle thereof, and the recess-for-second-driving-section 252 has two power cylinders 253 placed therein. The eighth mold part 220 is fixed to ends of the two power cylinders 253. The eighth mold part 220 is, for example, a plate-like member accommodated in the second recess 251, and is made of aluminum. The second recess 251 and the third recess 261 correspond to the foregoing bottoms 10a and 10b.

The third recess 261 has a recess-for-third-driving-section 262 formed therein, and the recess-for-third-driving-section 262 has two power cylinders 263 placed therein. The ninth mold part 230 is fixed to ends of the two power cylinders 263. The ninth mold part 230 is, for example, a plate-like member accommodated in the third recess 261, and is made of aluminum.

In the lower split mold 200, the surfaces of the eighth mold part 220 to the ninth mold part 230, when the foregoing pistons have moved fully forward, are substantially flush with the surfaces of the first long protrusion 221, the second long protrusion 231, and the third long protrusion 231 in the vicinities of the mold parts.

### [Molding preform with mold parts]

### (First state)

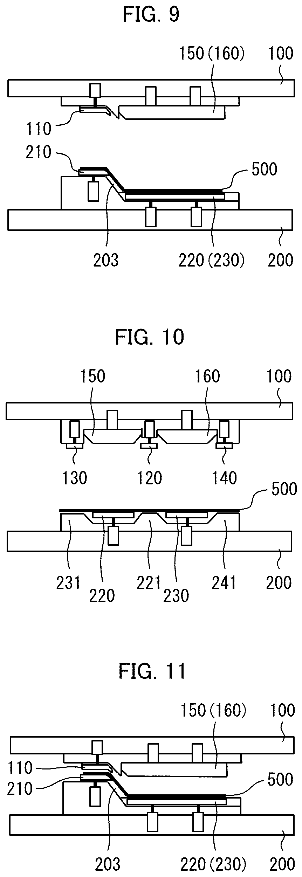

Fig. 9 is a side view schematically illustrating main parts of a mold in accordance with an embodiment of the present invention in a first state during production of a preform with use of the mold. Fig. 10 is a front view schematically illustrating the main parts of the mold in accordance with an embodiment of the present invention in the first state during production of a preform with use of the mold. As illustrated in Figs. 9 and 10, first, a planar reinforcing fiber base material 500 is placed on the lower split mold 200 of a preform mold.

Note that, in the following descriptions, the reinforcing fiber base material 500 may have, attached to both sides thereof, respective resin films for improving a releasing property.

In the lower split mold 200, the seventh mold part 210 is in a slightly advanced position. The eighth mold part 220 and the ninth mold part 230 are positioned such that the surfaces of the eighth mold part 220 and the ninth mold part 230 are equal in vertical position to the surfaces of the first long protrusion 221, the second long protrusion 231, and the third long protrusion 241. As such, in the first state, the reinforcing fiber base material 500 is supported by the seventh mold part 210, the sloping portion 203, the eighth mold part 220, the ninth mold part 230, the first long protrusion 221, the second long protrusion 231, and the third long protrusion 241.

Note that the upper split mold 100 is placed so as to face the lower split mold 200. The low portion 102 of the upper split mold 100 faces the high portion 202 of the lower split mold 200, the sloping portion 103 of the upper split mold 100 faces the sloping portion 203 of the lower split mold 200, and the high portion 104 of the upper split mold 100 faces the low portion 204 of the lower split mold 200. The upper split mold 100 is initially located at a sufficient distance from the lower split mold 200. Therefore, in the first state, it is easy to place the reinforcing fiber base material 500 on the lower split mold 200.

It is noted here that, in the first state, the position of each mold part in the upper split mold 100 is not limited. For example, the first mold part 110, the second mold part 120, the third mold part 130, and the fourth mold part 140 are each in a slightly moved forward position. The fifth mold part 150 and the sixth mold part 160 are each in a fully moved back position.

In the first state, the reinforcing fiber base material 500 is bent when seen in a longitudinal cross section of the lower split mold 200, but is supported substantially planar when seen in a widthwise cross section. Therefore, the reinforcing fiber base material 500 is not prone to wrinkles.

### (Second state)

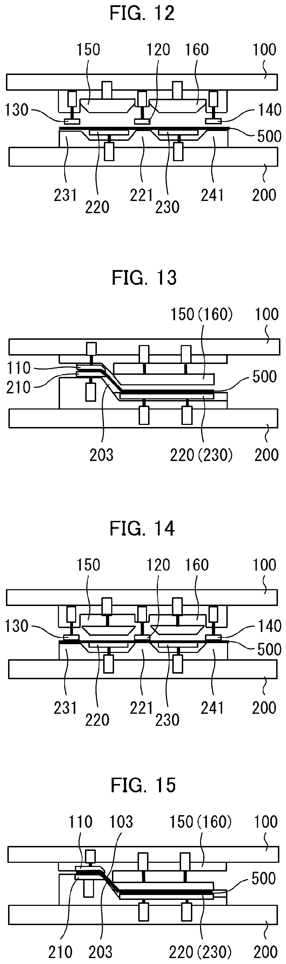

Fig. 11 is a side view schematically illustrating the main parts of the mold in accordance with an embodiment of the present invention in a second state during production of a preform with use of the mold. Fig. 12 is a front view schematically illustrating the main parts of the mold in accordance with an embodiment of the present invention in the second state during production of a preform with use of the mold.

As illustrated in Figs. 11 and 12, in the second state, the upper split mold 100 advances toward the lower split mold 200. As the upper split mold 100 advances toward the lower split mold 200, the first mold part 110, the second mold part 120, and the third mold part 130 of the upper split mold 100 also advance toward the lower split mold 200.

### (Third state)

Fig. 13 is a side view schematically illustrating the main parts of the mold in accordance with an embodiment of the present invention in a third state during production of a preform with use of the mold. Fig. 14 is a front view schematically illustrating the main parts of the mold in accordance with an embodiment of the present invention in the third state during production of a preform with use of the mold.

As illustrated in Figs. 13 and 14, in the third state, the upper split mold 100 advances toward the lower split mold 200 to a position where the first mold part 110 abuts the reinforcing fiber base material 500. In this way, a part of the reinforcing fiber base material 500 which part has been supported by the seventh mold part 210 is held between and fixed by the first mold part 110 and the seventh mold part 210.

Furthermore, in the third state, the second mold part 120, the third mold part 130, and the fourth mold part 140 advance to a position where they abut the reinforcing fiber base material 500. In this way, parts of the reinforcing fiber base material 500 which parts are supported by the first long protrusion 221, the second long protrusion 231, and the third long protrusion 241 of the lower split mold 200 are held between and fixed by the respective long protrusions and the second mold part 120, the third mold part 130, and the fourth mold part 140, respectively.

As such, the first mold part 110 to the fourth mold part 140 of the upper split mold 100, and the power cylinders which cause the first mold part 110 to the fourth mold part 140 to move forward and backward, constitute a first mechanism configured to cause a portion of the mold parts to fix, to the lower split mold 200, (i) an edge of a zone of a reinforcing fiber base material which zone is to undergo shear deformation and/or compressive deformation and (ii) a part adjacent to the zone.

Note that the fifth mold part 150 and the sixth mold part 160 of the upper split mold 100 advance toward the lower split mold 200 after the reinforcing fiber base material 500 is partially fixed as described above.

### (Fourth state)

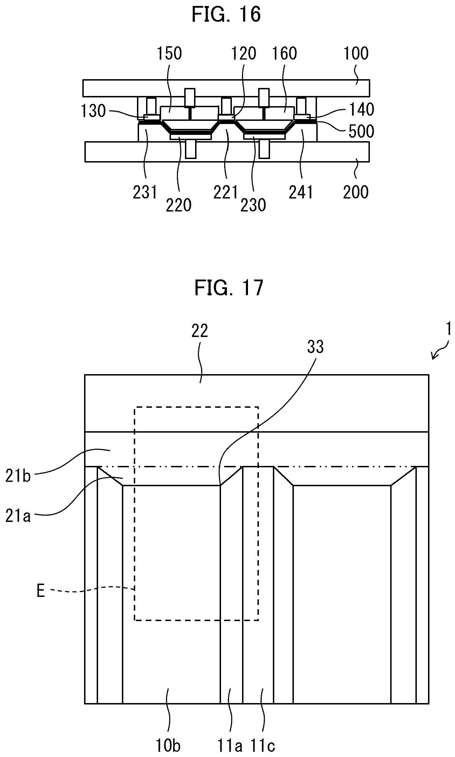

Fig. 15 is a side view schematically illustrating the main parts of the mold in accordance with an embodiment of the present invention in a fourth state during production of a preform with use of the mold. Fig. 16 is a front view schematically illustrating the main parts of the mold in accordance with an embodiment of the present invention in the fourth state during production of a preform with use of the mold.

As illustrated in Figs. 15 and 16, in the fourth state, the upper split mold 100 advances further toward the lower split mold 200. The first mold part 110 and the seventh mold part 210 are accommodated in the first recess 111 of the upper split mold 100 and the first recess 211 of the lower split mold 200, respectively. In this way, the reinforcing fiber base material 500 is sandwiched between the low portion 102 of the upper split mold 100 and the high portion 202 of the lower split mold 200. The reinforcing fiber base material 500 is also sandwiched between the sloping portion 103 of the upper split mold 100 and the sloping portion 203 of the lower split mold 200.

With regard to the high portion 104 of the upper split mold 100 and the low portion 204 of the lower split mold 200, first, the fifth mold part 150 and the sixth mold part 160 abut the parts of the reinforcing fiber base material 500 which parts are supported by the eighth mold part 220 and the ninth mold part 230, respectively. In this way, these parts are held between (i) the fifth mold part 150 and the sixth mold part 160 and (ii) the eighth mold part 220 and the ninth mold part 230.

Next, the fifth mold part 150 and the sixth mold part 160 each move further toward the lower split mold 200, and, as the fifth mold part 150 and the sixth mold part 160 move forward, the eighth mold part 220 and the ninth mold part 230 each move backward. Accordingly, the reinforcing fiber base material 500 is pressed further against the bottom of the second recess 251 and the bottom of the third recess 261 of the lower split mold 200. With this, a force in an out-of-plane direction is applied to a part adjacent to the part of the reinforcing fiber base material 500 which part abuts the sloping portions 103 and 203 (for example, the part indicated by the sign A2 in Fig. 4).

Furthermore, as the upper split mold 100 moves toward the lower split mold 200 in the fourth state, the second mold part 120, the third mold part 130, and the fourth mold part 140 each move backward. In this way, the reinforcing fiber base material 500 is sandwiched between (i) the high portion 104, the fifth mold part 150, and the sixth mold part 160 of the upper split mold 100 and (ii) the low portion 204 of the lower split mold 200.

Note that, at side surfaces of the first long protrusion 221 (for example, the parts indicated by the signs 11a and 11b in Fig. 3), the amount of deformation of the reinforcing fiber base material 500 in in-plane direction(s) is large, as will be shown later in Examples. Parts that are adjacent to the side surfaces and that are not fixed move in the in-plane direction(s) as the side surfaces deform. In the present embodiment, in parts of the reinforcing fiber base material 500 which parts are to be pressed against the second recess 251 and the third recess 261 of the lower split mold 200 (the parts indicated by the signs A3 in Fig. 4), movement in the in-plane direction(s) occurs toward the sloping portion 203 along the foregoing lengthwise direction, for example.

As described earlier, the surfaces of the upper split mold 100 and the lower split mold 200 of the mold in accordance with the present embodiment have been treated to have a releasing property using a fluororesin film or the like, and therefore have an excellent releasing property. The surface of the reinforcing fiber base material 500 is also covered with a resin film, as described earlier. Therefore, in the fourth state, even though the reinforcing fiber base material 500 is held between the fifth mold part 150 and the eighth mold part 220 or between the sixth mold part 160 and the ninth mold part 230, the reinforcing fiber base material 500 relatively easily moves in the in-plane direction(s). As a result, the parts of the reinforcing fiber base material 500 which parts abut the side surfaces of the first long protrusion 221 of the lower split mold 200 sufficiently deforms without inhibition. This further reduces the occurrence of wrinkles in the preform that would result from molding.

As such, the reinforcing fiber base material 500 is molded by the upper split mold 100 and the lower split mold 200, and then heated to cure to produce the foregoing preform for a floor pan.

### (Assisting movement in in-plane direction)

As described earlier, improving the releasing property of the surface of the mold and coating the surface of the reinforcing fiber base material 500 are effective in terms of assisting the movement of the reinforcing fiber base material 500 in the in-plane direction(s) that would result from molding.

As described earlier, such movement of the reinforcing fiber base material 500 in the in-plane direction(s) during molding can be assisted also by causing mold part(s) to move in desired in-plane direction(s). The movement of the mold part(s) in the in-plane direction(s) can be achieved by, for example, a mechanism that causes power cylinder(s) to move along rail(s) disposed in a recess for driving section(s). Alternatively, the above movement can be achieved by a mechanism that supports the power cylinder(s) at a predetermined angle to the desired in-plane direction(s), or can be achieved by a mechanism that inclines the power cylinder(s) gradually toward the desired in-plane direction(s). When the mold includes such an additional mechanism, it is possible to further reduce the occurrence of wrinkles in the reinforcing fiber base material during molding.

Aspects of the present invention can also be expressed as follows:
As is apparent from the above descriptions, a method of producing a preform in accordance with the present embodiment includes causing a planar reinforcing fiber base material to at least partially undergo shear deformation and/or compressive deformation to preform the reinforcing fiber base material into a three-dimensional shape, the reinforcing fiber base material including reinforcing fiber and a matrix resin composition. The method of producing a preform includes: a first step including fixing, to a preform mold, at least one of (i) an edge of a zone of the reinforcing fiber base material which zone is to undergo shear deformation and/or compressive deformation and (ii) a part (top surface 22, upper portion 21b, and top surface 11c) adjacent to the zone; and a second step including, after the edge and/or the part is/are fixed, applying a force in an out-of-plane direction to the zone (lower portion 21a) which is to undergo the shear deformation and/or compressive deformation.

With the above-described configuration, it is possible to preform the reinforcing fiber base material through fewer steps than a conventional method, substantially without causing wrinkles, into a complex three-dimensional shape in which shearing and compression can concurrently occur during preforming. This makes it possible to produce a preform that has superior appearance, that is capable of preventing or reducing a deterioration of mechanical properties, and that is superior in productivity.

Furthermore, with the present embodiment, it is possible to appropriately adjust the production conditions such as curing speed or physical properties such as strength, according to the makeup of the matrix resin composition. Thus, such a configuration is more effective in terms of producing a preform that has appropriate physical properties suitable for an intended use of the molded composite article.

In the present embodiment, the second step may further include a movement assisting step, the movement assisting step including assisting movement of the reinforcing fiber base material, accompanying the shear deformation and/or compressive deformation, in an in-plane direction. Further including a movement assisting step in the second step is more effective in terms of preventing or reducing the occurrence of wrinkles in the reinforcing fiber base material when the reinforcing fiber base material deforms in the out-of-plane direction.

In the present embodiment, the three-dimensional shape may be constituted by a developable surface and/or a three-dimensional curved surface. Such a configuration is more effective in terms of producing, in a manner that is superior in productivity, a preform that has good appearance despite the concurrent occurrence of shearing and compression during preforming.

In the present embodiment, in the second step, the force in the out-of-plane direction may be applied to a part of the zone which is to undergo the shear deformation and/or compressive deformation, the part of the zone being at least one selected from the group consisting of (i) a first part where an amount of deformation is largest, (ii) a second part where the amount of deformation is larger than that in a vicinity of the second part, (iii) a third part where the amount of deformation is larger than a threshold, and (iv) a fourth part where an average amount of deformation over a certain area is larger than a threshold. Such a configuration makes it possible to apply a force in the out-of-plane direction to part(s) that is more suitable for preventing or reducing the occurrence of wrinkle in the preform, and is more effective in terms of producing a molded composite article that has superior appearance that has superior appearance.

In the present embodiment, in the second step, the zone which is to undergo the shear deformation may be subjected to shear deformation which exceeds a maximum amount of deformation of the reinforcing fiber base material, thereby inducing out-of-plane deformation of the reinforcing fiber base material. Such a configuration makes it possible to produce a sufficiently good preform even with use of a reinforcing fiber base material which has an amount of deformation that is less than the amount of deformation required according to the shape of the preform to be produced. Thus, such a configuration is more effective in terms of allowing the reinforcing fiber base material to further exhibit its various mechanical properties (such as strength) in the molded composite article.

The present embodiment may further include a third step that includes pressing the entire reinforcing fiber base material after the second step. Such a configuration makes it possible to cause the reinforcing fiber base material to more sufficiently conform to a lower mold of the preform mold, and the distortion of the preform that would result during the production of the molded composite article can be further reduced. Thus, such a configuration is more effective in terms of producing a molded composite article that has superior appearance.

In the present embodiment, a lower mold of the preform mold may include (i) a bottom (10a (10b)) that at least includes, when seen in plan view, a first side (41 (51)), a second side (42 (52)), and one corner (3 1 (33)) and (ii) walls that extend upward from at least the first side and the second side; the one corner is formed by the first side and the second side; and the walls may include a first wall (wall 11a (11b)) that extends upward from the first side and a second wall (wall 21) that extends upward from the second side. With such a configuration, both the deformation caused by shearing and the deformation caused by compression occur during pressing. For example, if shear deformation occurs at the first wall, compressive deformation occurs at the second wall. Thus, in a method of producing a preform using a lower mold of a preform mold including the above-described structure, the effect brought about by the present embodiment is more apparent.

In the present embodiment, the bottom may further include (i) another corner (32 (34)) other than the one corner and (ii) a third side (43 (53)) other than the first side and the second side; the another corner may be formed by the second side and the third side; and the walls may further include a third wall (wall 12a (13a)) that extends upward from the third side. In a method of producing a preform using a lower mold of a preform mold including the above-described structure, a part of the reinforcing fiber base material which part is pressed by the second wall located between the first wall and the third wall undergoes greater compressive deformation. Thus, in a method of producing a preform using a lower mold of a preform mold including the above-described structure, the effect brought about by the present embodiment is more apparent.

In the present embodiment, inner surfaces of the walls may be sloping surfaces at an obtuse angle to an inner surface of the bottom. In a method of producing a preform using a lower mold of a preform mold including the above-described structure, a part of the reinforcing fiber base material which part is pressed by the second wall located between the first wall and the third wall undergoes greater compressive deformation with decreasing distance to the bottom. Thus, in a method of producing a preform using a lower mold including the above-described structure, the effect brought about by the present embodiment is more apparent.

In the present embodiment, a sheet of the reinforcing fiber base material may be used or two or more sheets of the reinforcing fiber base material stacked together may be used. Such a configuration is more effective in terms of easily achieving desired mechanical properties such as strength required for a molded composite article.

In the present embodiment, the reinforcing fiber base material may a unidirectional prepreg, a cloth prepreg, and/or a prepreg sheet. Such a configuration is more effective in terms of producing, with high productivity, a molded composite article having desired mechanical properties.

A method of producing a molded composite article in accordance with the present embodiment includes the steps of: producing a preform by the foregoing method of producing a preform; and producing a molded composite article by applying heat and pressure to the preform. With such a configuration, even in a case of a molded composite article having a complex three-dimensional shape, it is possible to produce the molded composite article from a preform that is obtained by preforming a single sheet of reinforcing fiber base material and that has good appearance. This makes it possible to achieve the production of a molded composite article that has superior appearance, that is capable of preventing or reducing a deterioration of mechanical properties, and that is superior in productivity.

A method of producing a molded composite article in accordance with the present embodiment may include: the foregoing first step and second step; and a molding step including applying heat and pressure to the reinforcing fiber base material, which is receiving a force in an out-of-plane direction, to obtain a molded composite article. This configuration is more effective in terms of increasing productivity compared to the foregoing production method that includes making a preform.

A mold in accordance with the present embodiment includes an upper mold and a lower mold, in which one or both of the upper mold and the lower mold is/are split mold(s) composed of mold parts that are independently movable. The mold includes: a first mechanism configured to cause a portion of the mold parts to fix, to the lower mold, at least one of (i) an edge of a zone of a planar reinforcing fiber base material which zone is to undergo shear deformation and/or compressive deformation and (ii) a part adjacent to the zone, the reinforcing fiber base material including reinforcing fiber; and a second mechanism configured to cause another portion of the mold parts to apply a force, in an out-of-plane direction of the reinforcing fiber base material, to the zone which is to undergo the shear deformation and/or compressive deformation.

With the above-described configuration, it is possible to produce a preform in a three-dimensional shape from a reinforcing fiber base material through fewer steps than using a conventional mold, substantially without causing wrinkles during producing the preform. This makes it possible to produce a preform that has superior appearance, that is capable of preventing or reducing a deterioration of mechanical properties, and that is superior in productivity.

A split mold in accordance with the present embodiment may further include a third mechanism configured to cause the another portion of the mold parts to move in an in-plane direction of the reinforcing fiber base material. This configuration is more effective in terms of preventing or reducing the occurrence of wrinkles accompanying the deformation of the reinforcing fiber base material in the out-of-plane direction.

In the present embodiment, the third mechanism may be a mechanism configured to cause the another portion of the mold parts to move along a rail extending along the in-plane direction. With this configuration, the movement of the reinforcing fiber base material in the in-plane direction by the third mechanism can be carried out independently of the deformation of the reinforcing fiber base material in the out-of-plane direction by the second mechanism. This configuration is more effective in terms of precisely carrying out the movement of the reinforcing fiber base material in the in-plane direction by the third mechanism.

In the present embodiment, the second mechanism may include a power cylinder (for example, 113) configured to cause the another portion of the mold parts to move forward and backward along the out-of-plane direction. This configuration is more effective in terms of easily constructing the second mechanism.

In the present embodiment, the power cylinder may be disposed in an inclined manner so that the power cylinder moves forward and backward with respect to both the out-of-plane direction and the in-plane direction of the reinforcing fiber base material. This configuration is more effective in terms of stably producing a high-quality preform or molded composite article, because the second mechanism serves also as the third mechanism.

The present invention is not limited to the embodiments, but can be altered by a skilled person in the art within the scope of the claims. The present invention also encompasses, in its technical scope, any embodiment derived by combining technical means disclosed in differing embodiments.

### Examples

### [Preparation of prepreg laminate 1]

Two sheets of Pyrofil prepreg (product name: "TR361E250S", manufactured by Mitsubishi Chemical Corporation) were stacked together such that their reinforcing fiber orientation directions were orthogonal to each other, and then the stack of prepreg sheets was covered with a bagging film with a breather therebetween and compacted (vacuum pressure was 700 mmHg, and vacuumization was carried out for 3 minutes). In this way, a compacted prepreg laminate 1 was obtained. The arrangement of the reinforcing fibers on top of each other in the prepreg laminate 1 is expressed as "[0°/90°]".

The bagging film corresponds to the foregoing elastic sheet. The bagging film used here was "matte PVC film" (which is a product name, 0.2 T × 50 m × 1370 mW, made of PVC) manufactured by Okamoto Industries, Inc. The breather is nonwoven fabric serving as a gas vent layer during compaction. The breather used here was "A3000-4 Breather level 10" (product name) manufactured by Richmond Aircraft Products. For the purpose of preventing the fiber of the breather from adhering to the prepreg, during the compaction, the protective film of the prepreg on the side where the breather is located was not removed, and the breather was placed on the prepreg stack with the protective film therebetween.

A deformation test was carried out on the prepreg laminate 1 in the following manner.

First, a sample S of the prepreg laminate 1 having a size of 26 cm × 26 cm, as illustrated in Fig. 1, was prepared. The 5 cm margin on each side of the sample S is a part to be held by a jig. The shape of the sample S in plan view is rectangle. Two opposite sides of the sample S are parallel to a fiber direction of the prepreg laminate 1. Furthermore, the sample S has rectangular cells Cu arranged in a grid pattern. The angle (θ1) of a corner of each cell Cu is 90°. The cell Cu is a square of 2 cm per side.

Each of the two opposite sides of the sample S was held with a jig. Then, one of the jigs was moved at a rate of 2 to 8 cm/second in a direction parallel to the opposite sides, in the environment of room temperature (25°C) and 45% humidity. The sample was visually checked, and the angle (θ2) of a corner of the rectangular cell Cu, when a wrinkle occurred in the sample due to the shearing, was measured. Then, the difference (absolute value) between θ1 and θ2 was determined, and was used as the amount of deformation of the prepreg laminate 1.

The prepreg laminate 1 did not become wrinkled even when the amount of deformation was 54° in the deformation test. In this way, it was confirmed that the amount of deformation of the prepreg laminate 1 is more than 54°.

### [Preparation of cloth prepreg]

The same deformation test as described above was carried out, except that the prepreg laminate 1 was changed to a cloth prepreg (product name: "TR3523 361GMP", manufactured by Mitsubishi Chemical Corporation). Note that the fabric structure of the cloth prepreg is twill weave, in which reinforcing fiber bundles are orthogonal to each other. Therefore, a single sheet of the cloth prepreg, without stacking a plurality of sheets of the cloth prepreg, was evaluated. The amount of deformation of the cloth prepreg was 17°.

### [Example 1]

A cavity as illustrated in Fig. 3 was used as a lower mold, and the prepreg laminate 1 was placed on the lower mold. Next, the prepreg laminate 1 was fixed to the fix portion A1 in the manner as described earlier. Next, the fixed prepreg laminate 1 was pressed against the compressive deformation portion A2 to abut the compressive deformation portion A2. Next, the upper mold was caused to advance toward the lower mold, and the prepreg laminate 1 was pressed with the upper mold toward the entire lower mold. In this way, a reinforcing fiber base material 1 was preformed to produce a preform 1.

### [Example 2]

The same operations as described in Example 1 were carried out, except that a cloth prepreg was used instead of the prepreg laminate 1. In this way, a preform 2 was produced.

### [Comparative Example 1]

The same operations as described in Example 1 were carried out, except that the fixing to the fix portion was not carried out. In this way, a preform C1 was produced.

### [Comparative Example 2]

The same operations as described in Example 1 were carried out, except that, after the fixing to the fix portion, the pressing against the compressive deformation portion was not carried out but the entire prepreg laminate 1 was pressed toward the lower mold. In this way, a preform C2 was produced.

### [Comparative Example 3]

The same operations as described in Example 1 were carried out, except that neither the fixing to the fix portion nor the pressing against the compressive deformation portion was carried out but the entire prepreg laminate 1 was pressed toward the lower mold. In this way, a preform C3 was produced.

### [Comparative Example 4]

As disclosed in Patent Literature 1, a preform including raised portions extending along the axial direction and a preform including a raised portion extending along a direction orthogonal to the axial direction, as illustrated in Fig. 1 of Patent Literature 1, were each independently prepared from the prepreg laminate 1, and the preforms were compressed while the joining edges of the preforms were in contact with each other. In this way, a preform C4 was produced.

### [Evaluation of preform]

A plurality of engineers visually checked each of the preforms 1 and 2 and the preforms C1 to C4, and evaluated them in terms of the following there items on the basis of the following criteria. With regard to the items (1) and (2), a crease in the reinforcing fiber base material, having a length of 20 mm or more or having a width of 2 mm or more when the preform was seen in an in-plane direction, was determined to be a wrinkle. With regard to the item (3), a linear dark area, when the preform was seen in the in-plane direction, was determined to be fiber meandering or fiber twisting depending on the shape of the dark area.
(1) Conformity to mold
   A: The reinforcing fiber base material sufficiently conforms even to edges and corners of the preform mold.
   B: There is a space between the reinforcing fiber base material and the edges and/or corners of the preform mold, but the preform is acceptable for practical use.
   C: The reinforcing fiber base material insufficiently conforms to the preform mold, and the preform is unacceptable for practical use.
(2) Wrinkle in compressive deformation portion
   A: No wrinkles were observed in the compressive deformation portion.
   B: Some wrinkles were observed in the compressive deformation portion, but the wrinkles would probably disappear substantially via the subsequent step of applying heat and pressure. The preform is acceptable for practical use.
   C: A plurality of large wrinkles were observed in the compressive deformation portion. The preform is unacceptable for practical use.
(3) Fiber meandering resulting from preforming
   A: Fiber meandering or fiber twisting resulting from preforming was not observed.
   B: A little fiber meandering or fiber twisting resulting from performing were observed, but the preform is acceptable for practical use.
   C: Strong fiber meandering or fiber twisting resulting from preforming was observed, and the preform is unacceptable for practical use.

The results of evaluations are shown in Table 1.

**[Table 1]**

| Preform No. | Conformity to mold | Wrinkle in compressive deformation portion | Fiber meandering resulting from preforming |
|---|---|---|---|
| 1 | A | A | A |
| 2 | B | B | A |
| C1 | C | C | C |
| C2 | C | C | C |
| C3 | C | C | C |
| C4 | A | A | A |

The preforms 1 and 2 each have a good appearance in which the occurrence of wrinkles is sufficiently reduced, and are sufficiently preformed. A reason therefor is inferred to be that the reinforcing fiber base material impregnated with a matrix resin composition sufficiently deformed and that, because the compressive deformation portion was pressed, creases in the reinforcing fiber base material impregnated with a matrix resin composition in the compressive deformation portion were smoothed out and the occurrence of wrinkles in the compressive deformation portion was prevented.

In contrast, the preforms C1 to C3 wrinkled to the extent that the preforms would be unacceptable for practical use. A reason therefor is inferred to be that large creases were made in the reinforcing fiber base material in at least one of (i) a zone to undergo shear deformation and (ii) a zone to undergo compressive deformation, and resulted in wrinkles.

### [Detection of amount of deformation in preform]

Note that the following experiment was carried out in order to observe partial deformation of the reinforcing fiber base material in a preform. Fig. 17 is a plan view of a lower mold used in Examples.

The foregoing reinforcing fiber base material 1 impregnated with a matrix resin composition, with a grid pattern thereon, was used to produce a preform 1A in the same manner as described in Example 1. Then, the amount of deformation with regard to each cell of the pattern on the preform 1A was determined. Similarly, a reinforcing fiber base material 2 impregnated with a matrix resin composition, with a grid pattern thereon, was used to produce a preform 2A in the same manner as described in Example 1, and the amount of deformation with regard to each cell of the pattern was determined.

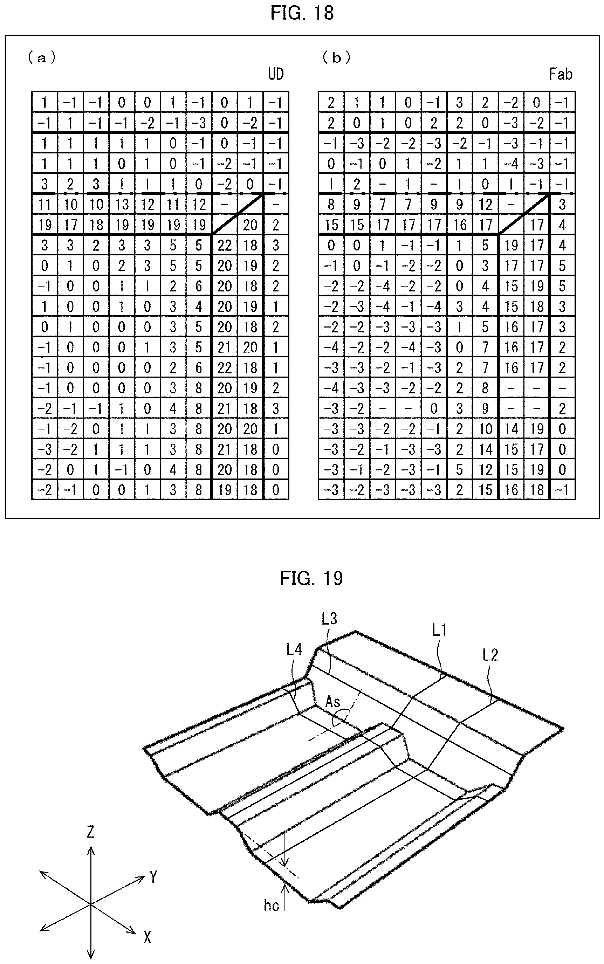

Fig. 18 shows the amounts of deformation in main parts of preforms of Examples. (a) of Fig. 18 shows the amounts of deformation in the part, which is indicated by the sign E in Fig. 17, of the preform 1A. (b) of Fig. 18 shows the amounts of deformation in the part, which is indicated by the sign E in Fig. 17, of the preform 2A. The numerical values in Fig 18 are each the difference between θ1 and θ2 (the value obtained by subtracting θ1 from θ2) with regard to the upper right (in the sheet on which Fig. 18 is printed) corner of a corresponding cell of the pattern.

Fig. 18 shows that each of the reinforcing fiber base materials 1 and 2 impregnated with a matrix resin composition has deformed greatly at the wall 11b and the lower portion 21a. As shown in (a) of Fig. 18, the reinforcing fiber base material 1 impregnated with a matrix resin composition has deformed such that the amount of deformation is more than 20° at the wall 11b and is less than 20° at the lower portion 21a, and the deformation at the bottom 10b and the upper portion 21b is substantially prevented. The amount of deformation of the reinforcing fiber base material 1 impregnated with a matrix resin composition is more than 54°. Thus, it is understandable from (a) of Fig. 18 that the reinforcing fiber base material 1 has sufficiently deformed in its parts corresponding to the wall 11b and the lower portion 21a and conformed to the wall 11b and the lower portion 21a.

On one hand, the amount of deformation of the reinforcing fiber base material 2 is 17°. Therefore, as shown in (b) of Fig. 18, the amount of deformation of the reinforcing fiber base material 2 at the wall 11b and the lower portion 21a is kept substantially at about 17°. On the other hand, the amount of deformation at the bottom 10b and the upper portion 21b is greater than that of the reinforcing fiber base material 1. As such, the reinforcing fiber base material 2 has deformed in out-of-plane deformation(s) also in the vicinity of a part that deforms greatly. It is understandable from this that the reinforcing fiber base material 2 has deformed in a part that is required to deform greatly and in its vicinity that is substantially not required to deform, and thereby deformed to the extent that the preform conforms sufficiently to the wall 11b and the lower portion 21a.

### [Example 3]

The preform 1 was placed in a mold for molding, heat and pressure were applied at 140°C and 4 MPa for 5 minutes, the mold was cooled to room temperature, the obtained molded article was removed from the mold. In this way, a molded composite article 1 having a shape as illustrated in Fig. 3, which will become a floor pan to be placed inside a car, was produced.

Fig. 19 is a drawing with reference to which the dimensions of the floor pan produced in the Example are described. In Fig. 19, arrows X, Y, and Z are orthogonal to each other. The arrow X indicates a direction that transverses the corrugated structure in the planar shape of the floor pan, whereas the arrow Y indicates a direction along the lengthwise direction of the corrugated structure. The arrow Z indicates a height direction of the corrugated structure.

In Fig. 19, L1 indicates a line segment that extends on the top surface of the corrugated structure along the Y direction. L2 indicates a line segment that extends on the surface of the bottom of the corrugated structure along the Y direction. L3 indicates a line segment that extends on the surface of the sloping portion along the X direction. L4 indicates a line segment that extends, along the X direction, on top surfaces, surfaces of walls, and surfaces of the bottoms of the corrugated structure. "As" indicates the angle between the surface of a bottom and the surface of a sloping portion in the Y direction. "hc" indicates the distance between the top surface and the bottom of the corrugated structure in the Z direction (the vertical position of the top surface relative to the bottom).

With regard to the floor pan, the length of the line segment L1 is 520 mm, the length of the line segment L2 is 548 mm, the length of the line segment L3 is 440 mm, and the length of the line segment L4 is 530 mm. The shortest distance between L1 and L2 is 40 mm, and the shortest distance between L3 and L4 is 30 mm. As is 35°, and hc is 82.5 mm.

### [Example 4 and Comparative Example 5]

The same operations as described in Example 3 were carried out, except that the preform 2 or the preform C4 was used instead of the preform 1. In this way, molded composite articles 2 and C4 were obtained, respectively.

No wrinkles were observed in the top surfaces of the molded composite articles 1, 2, and C4 to which the upper mold abutted, and each of the molded composite articles 1, 2, and C4 had good appearance. It is understandable from this that, when specific zones of a planar reinforcing fiber base material impregnated with a matrix resin composition are fixed and pressed in a specific order, it is possible to obtain a preform and a molded composite article that are equivalent in appearance to or superior in appearance to a conventional preform obtained by joining partial preforms.

Furthermore, the process in accordance with Examples, for producing such a preform having superior appearance, does not include at least the following three steps. It is apparent from this that a preform having superior appearance can be produced through fewer steps than conventional processes. It is also apparent that the process in accordance with Examples is superior in productivity to conventional processes.
- Step of cutting a reinforcing fiber base material to obtain partial preforms and stacking the partial preforms
- Step of assembling the partial preforms
- Step of press fitting the partial preforms in an assembled state

On the contrary, the preforms C1 to C3 each had wrinkles and creases which were too large to be acceptable for practical use. Therefore, molded composite articles were not produced from the preforms C1 to C3.

### Industrial Applicability

The present invention can be applied to production of a molded composite article having a complex shape, which has conventionally been difficult to obtain by molding a single sheet of a reinforcing fiber base material impregnated with a matrix resin composition. The present invention is suitable for, in particular, production of a member that is required to have both good appearance and mechanical properties such as an automotive component.

### Reference Signs List

1 lower mold
10 corrugated structure
10a, 10b bottom
11 long protrusion
11c, 12b, 13b, 22 top surface
11a, 11b, 12a, 13a, 21 wall
12, 13 peripheral protrusion
20 front raised portion
21a lower portion
21b upper portion
31, 32, 33, 34 corner
41, 51 first side
42, 52 second side
43, 53 third side
100 upper split mold
101 upper split mold body
102, 204 low portion
103, 203 sloping portion
104, 202 high portion
110 first mold part
111, 211, 251 first recess
112 recess-for-first-driving-section
113, 122, 132, 142, 153, 163, 213, 253, 263 power cylinder
120 second mold part
121, 221 first long protrusion
130 third mold part
131, 231 second long protrusion
140 fourth mold part
141, 241 third long protrusion
150 fifth mold part
151, 251 second recess
152, 252 recess-for-second-driving-section
160 sixth mold part
161, 261 third recess
162, 262 recess-for-third-driving-section
200 lower split mold
201 lower split mold body
210 seventh mold part
212 recess-for-seventh-driving-section
220 eighth mold part
230 ninth mold part
A1 fix portion
A2 compressive deformation portion
A3 press portion
Cu cell of pattern
S sample

## Claims

1. A method of producing a preform, comprising causing a reinforcing fiber base material to at least partially undergo shear deformation and/or compressive deformation to preform the reinforcing fiber base material into a three-dimensional shape, the reinforcing fiber base material being planar and including reinforcing fiber and a matrix resin composition, the method comprising:
a first step comprising fixing, to a preform mold, at least one of (i) an edge of a zone of the reinforcing fiber base material which zone is to undergo shear deformation and/or compressive deformation and (ii) a part adjacent to the zone; and
a second step comprising, after the edge and/or the part is/are fixed, applying a force in an out-of-plane direction to the zone which is to undergo the shear deformation and/or compressive deformation.

2. The method as set forth in claim 1, wherein the second step further comprises a movement assisting step, the movement assisting step comprising assisting movement of the reinforcing fiber base material, accompanying the shear deformation and/or compressive deformation, in an in-plane direction.

3. The method as set forth in claim 1 or 2, wherein the three-dimensional shape is constituted by a developable surface and/or a three-dimensional curved surface.

4. The method as set forth in any one of claims 1 to 3, wherein, in the second step, the force in the out-of-plane direction is applied to a part of the zone which is to undergo the shear deformation and/or compressive deformation, the part of the zone being at least one selected from the group consisting of (i) a first part where an amount of deformation is largest, (ii) a second part where the amount of deformation is larger than that in a vicinity of the second part, (iii) a third part where the amount of deformation is larger than a threshold, and (iv) a fourth part where an average amount of deformation over a certain area is larger than a threshold.

5. The method as set forth in any one of claims 1 to 4, wherein, in the second step, the zone which is to undergo the shear deformation is subjected to shear deformation which exceeds a maximum amount of deformation of the reinforcing fiber base material, thereby inducing out-of-plane deformation of the reinforcing fiber base material.

6. The method as set forth in any one of claims 1 to 5, further comprising a third step that comprises pressing the entire reinforcing fiber base material after the second step.

7. The method as set forth in any one of claims 1 to 6, wherein:
a lower mold of the preform mold includes (i) a bottom that at least includes, when seen in plan view, a first side, a second side, and one corner and (ii) walls that extend upward from at least the first side and the second side;
the one corner is formed by the first side and the second side; and
the walls include a first wall that extends upward from the first side and a second wall that extends upward from the second side.

8. The method as set forth in claim 7, wherein:
the bottom further includes (i) another corner other than the one corner and (ii) a third side other than the first side and the second side;
the another corner is formed by the second side and the third side; and
the walls further include a third wall that extends upward from the third side.

9. The method as set forth in claim 7 or 8, wherein inner surfaces of the walls are sloping surfaces at an obtuse angle to an inner surface of the bottom.

10. The method as set forth in any one of claims 1 to 9, wherein a sheet of the reinforcing fiber base material is used or two or more sheets of the reinforcing fiber base material stacked together are used.

11. The method as set forth in claim 9 or 10, wherein the reinforcing fiber base material is a unidirectional prepreg, a cloth prepreg, and/or a prepreg sheet.

12. A method of producing a molded composite article, comprising the steps of:
producing a preform by a method as set forth in any one of claims 1 to 11; and
producing a molded composite article by applying heat and pressure to the preform.

13. A method of producing a molded composite article, comprising causing a reinforcing fiber base material to at least partially undergo shear deformation and/or compressive deformation to obtain a molded composite article, the reinforcing fiber base material being planar and including reinforcing fiber and a matrix resin composition, the method comprising:
a first step comprising fixing, to a shaping mold, at least one of (i) an edge of a zone of the reinforcing fiber base material which zone is to undergo shear deformation and/or compressive deformation and (ii) a part adjacent to the zone;
a second step comprising, after the edge and/or the part is/are fixed, applying a force in an out-of-plane direction to the zone which is to undergo the shear deformation and/or compressive deformation; and
a molding step comprising applying heat and pressure to the reinforcing fiber base material, which is receiving the force in the out-of-plane direction, to obtain a molded composite article.

14. A mold comprising an upper mold and a lower mold,
wherein one or both of the upper mold and the lower mold is/are split mold(s) composed of mold parts that are independently movable,
the mold comprising:
a first mechanism configured to cause a portion of the mold parts to fix, to the lower mold, at least one of (i) an edge of a zone of a reinforcing fiber base material which zone is to undergo shear deformation and/or compressive deformation and (ii) a part adjacent to the zone, the reinforcing fiber base material being planar and including reinforcing fiber; and
a second mechanism configured to cause another portion of the mold parts to apply a force, in an out-of-plane direction of the reinforcing fiber base material, to the zone which is to undergo the shear deformation and/or compressive deformation.

15. The mold as set forth in claim 14, further comprising a third mechanism configured to cause the another portion of the mold parts to move in an in-plane direction of the reinforcing fiber base material.

16. The mold as set forth in claim 15, wherein the third mechanism is a mechanism configured to cause the another portion of the mold parts to move along a rail extending along the in-plane direction.

17. The mold as set forth in claim 14, wherein the second mechanism is a power cylinder configured to cause the another portion of the mold parts to move forward and backward along the out-of-plane direction.

18. The mold as set forth in claim 17, wherein the power cylinder is disposed in an inclined manner so that the power cylinder moves forward and backward with respect to both the out-of-plane direction and the in-plane direction of the reinforcing fiber base material.
